Europäisches Patentamt

European Patent Office

Office européen des brevets

(19)

(11) **EP 1 328 100 A1**

(12) **EUROPEAN PATENT APPLICATION**

(43) Date of publication:
**16.07.2003 Bulletin 2003/29**

(51) Int Cl.[7]: **H04L 27/26**, H04L 25/02

(21) Application number: **03000198.6**

(22) Date of filing: **07.01.2003**

| | |
|---|---|
| (84) Designated Contracting States:<br>**AT BE BG CH CY CZ DE DK EE ES FI FR GB GR**<br>**HU IE IT LI LU MC NL PT SE SI SK TR**<br>Designated Extension States:<br>**AL LT LV MK RO**<br><br>(30) Priority: **09.01.2002 JP 2002001982**<br><br>(71) Applicant: **Matsushita Electric Industrial Co., Ltd.**<br>**Kadoma-shi, Osaka-fu 571-8501 (JP)** | (72) Inventors:<br>• **Ito, Atsushi**<br>  **Suita-shi, Osaka-fu 565-0872 (JP)**<br>• **Kimura, Tomohiro**<br>  **Hirakata-shi, Osaka-fu 573-0171 (JP)**<br>• **Ishii, Masahiro**<br>  **Nishinomiya-shi, Hyogo-ken 662-0092 (JP)**<br><br>(74) Representative: **Gassner, Wolfgang, Dr.**<br>**Patentanwalt,**<br>**Nägelsbachstrasse 49a**<br>**91052 Erlangen (DE)** |

(54) **OFDM receiver and method for correcting multipath phase deviation using a training sequence and for performing carrier and clock recovery using pilot symbols**

(57)     An object of the present invention is to provide an OFDM communications apparatus for phase correction which does not gradually lose accuracy or require a complex hardware. An Arctan vector phase rotator (104) calculates a phase of a received vector signal. A phase correction information estimator (105) calculates both an estimated multipath-fading deviation value from the phase of a vector in a training symbol, and a non-multipath-fading deviation value from the phase of a vector in a pilot signal. An adder (106) adds these two estimated deviation values together for output as a total phase correction value. Based on the total phase correction value, the Arctan vector phase rotator (104) rotates the phase of a vector to be demodulated (107) for phase correction.

F I G. 1

EP 1 328 100 A1

**Description**

BACKGROUND OF THE INVENTION

Field of the Invention

The present invention relates to receiving apparatuses for OFDM communications in a digital wireless communications system. More specifically, the present invention relates to a phase compensating apparatus and a method of estimating phase compensation information.

Description of the Background Art

In wireless communications, deterioration in transmission characteristics occurs mainly due to multipath fading. To cope with multipath fading, an OFDM (Orthogonal Frequency Division Multiplexing) transmission scheme resistant to multipath fading has attracted attention in recent years. This OFDM scheme is performed by multiplexing a plurality (several tens to several thousands) of digital modulated signals orthogonal to each other in a frequency band. A signal received at a receiving side is observed with its phase changed due to noises, for example. Therefore, in communications using this scheme, a phase correcting process is carried out after an OFDM modulating process is performed with FFT. At least the following four factors are known to contribute to the occurrence of phase errors.

A first factor for phase errors is multipath fading. An input to an antenna at the receiving side is a composite signal including a direct wave of a transmission signal and a plurality of indirect waves reflected by the surrounding building, for example, to the receiving side. These indirect waves each have a time difference from the direct wave. Furthermore, the states of the direct wave and the indirect waves become varied depending on an environment between a transmitting side and the receiving side. Therefore, the receiving side receives a composite wave including the direct wave and the group of indirect waves each having a time difference from the direct wave, meaning that the receiving side receives a signal with its phase varied. This phenomenon is called multipath fading.

If the state of a transmission path during communications is constant, an effect of multipath fading to the phase is uniquely defined by a frequency band of communication data. Also, it goes without saying that, as the state of the transmission path is changed during communications, the state of phase deviation is changed accordingly. For example, in mobile communications, a transmitter and a receiver both move, thereby always changing the state of a transmission path therebetween. Therefore, the effect of multipath fading to the signal phase is also varied with time.

A second factor for phase errors is an error that occurs due to frequency deviation in a quadrature detector. When the frequency of the quadrature detector is deviated from the frequency of a reception signal, a signal after detection has uniform phase deviation.

A third factor for phase errors is fluctuation of a carrier (a carrier transmitted from the transmitting side to the receiving side). If a waveform of the carrier itself is fluctuated, an error may occur at sampling. With a sampling position being shifted, data after sampling has uniform phase deviation.

A fourth factor for phase errors is a deviation of a sampling frequency itself. If the sampling frequency at the receiving side is deviated from the frequency at the transmitting side, the sampling position is gradually deviated, and a phase of a vector after sampling is also gradually deviated. This deviation tends to become larger in subsequent vector data.

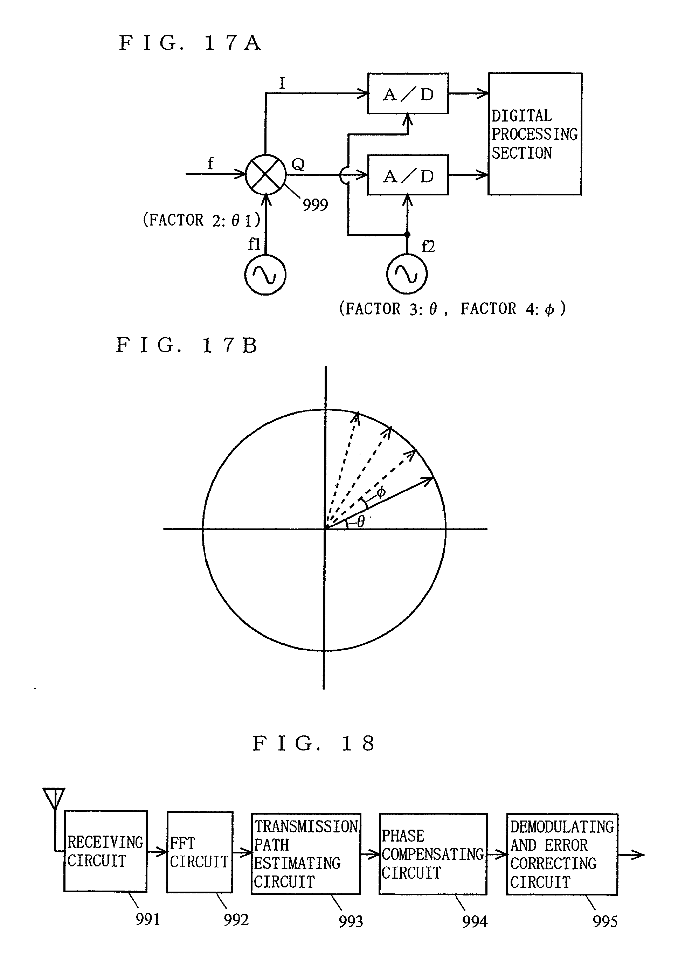

FIGS. 17A and 17B are illustrations for describing phase errors occurring due to the above second to fourth factors. A circuit illustrated in FIG. 17 is provided in the former stage of an FFT circuit in an OFDM communications apparatus. As illustrated in FIG. 17A, when the frequency f of a signal and a frequency f1 of a quadrature detector 999 has a phase deviation $\theta1$, an error occurs due to the second factor. Also, a phase deviation $\theta$ occurring due to the third factor and a phase deviation $\phi$ occurring due to the fourth factor cause a phase error $\theta + n\phi$ (n is an integer) on data after sampling. As will be described further below, $n\phi$ can be corrected by finding $\phi$ from a correlation between the adjacent vectors. Also, $\theta$ can be corrected by performing a phase correcting process after FFT.

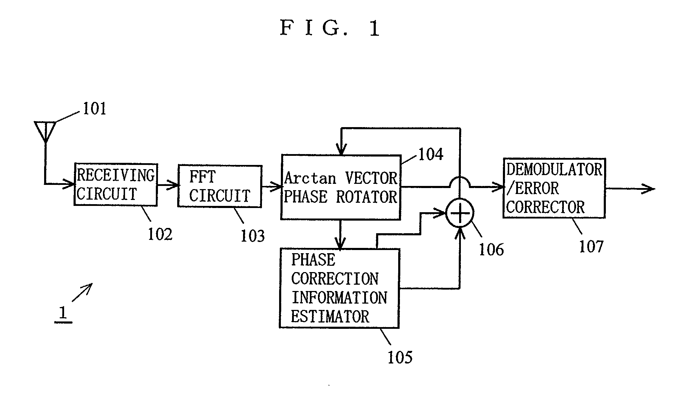

Conventional solutions for correcting phase errors occurring due to the above first through fourth factors are described below. FIG. 18 is a block diagram illustrating the construction of a conventional OFDM communications apparatus. In FIG. 18, the conventional OFDM communications apparatus includes a receiving circuit 991, an FFT circuit 992, a transmission path estimating circuit 993, a phase compensating circuit 994, a demodulating and error correcting circuit 995. Such an OFDM communications apparatus is disclosed in Japanese Patent Laid-Open Publication No. 2001-86092, pp. 4-5, and FIG. 1.

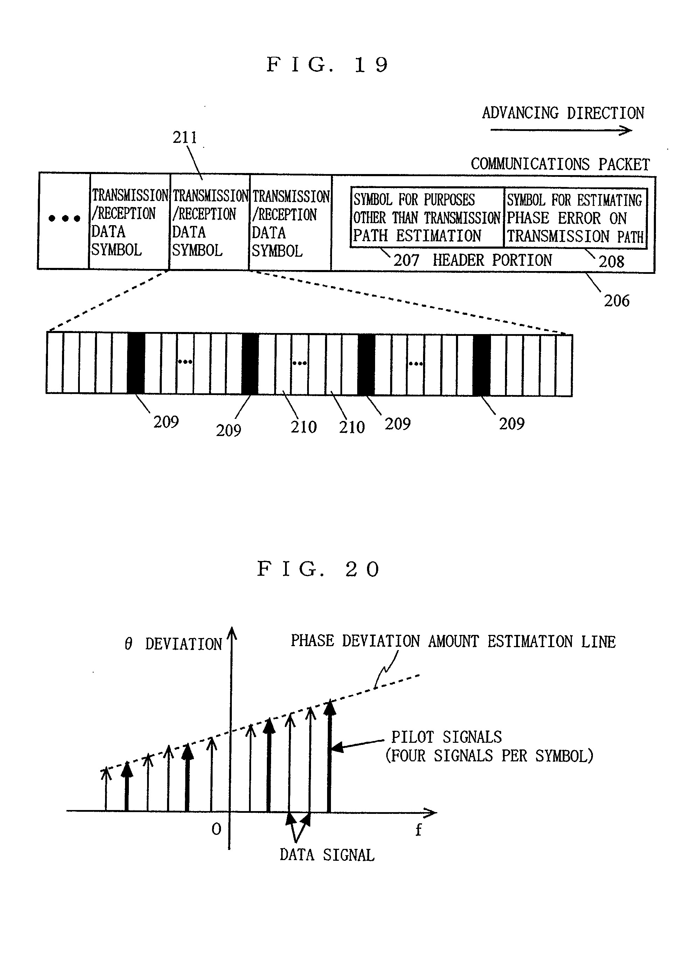

The conventional solution for correcting phase errors occurring due to the above first factor is described below. In order to mitigate phase errors due to the first factor, a known signal provided to a header portion of a communications packet is used. FIG. 19 is an illustration showing the structure of a communications packet. As illustrated in FIG. 19, a header portion 206 in the communications packet includes a symbol 207 for phase error estimation on a transmission path, and a symbol 208 for another purpose other than phase error estimation. The symbol 207 for phase error estimation includes a known signal to mitigate phase errors due to the first factor. Data included in the known signal is previously known at the OFDM communications apparatus side. In the OFDM communications apparatus, the FFT circuit 992 performs an OFDM demodulation process (FFT operation), and then the transmission path estimating circuit 993 performs complex multiplication of data of the known signal by a complex conjugate of received data to find a transmission path response vector indicative of a transmission function affected by multipath fading. Then, the transmission path estimating circuit 993 further performs complex multiplication of the transmission path response vector so as to rotate the phase of the reception signal, thereby correcting phase deviation occurring due to the first factor.

The conventional solution for correcting phase errors occurring due to the above second, third, and fourth factors is described below. When sub-carrier signals in an OFDM symbol are aligned on a frequency axis and a phase deviation amount is set in the vertical axis, as illustrated in FIG. 20, a distribution of the phase deviation amount occurring due to the second, third, and fourth factors of the signal viewed in the frequency-axis direction is represented by a linear function. Therefore, the phase compensating circuit 994 in the OFDM communications apparatus first measures a phase deviation amount of a pilot signal 209 for phase error estimation. The pilot signal 209 is a known signal included in a symbol other than that included in the header portion of the communications packet. The phase compensating circuit 994 then estimates a phase deviation amount of every transmission/reception signals from the phase deviation amount of each pilot signal. Thereafter, the phase compensating circuit 994 uses a CORDIC algorithm to perform a phase rotating process, taking the estimated phase deviation amount as a phase rotation amount for each vector. With this, phase deviation occurring due to the second, third, and fourth factors can be corrected.

Here, in the solution for correcting phase errors occurring due to the second, third, and fourth factors, the process is carried out by a unit of an OFDM symbol. Therefore, an OFDM symbol with burst noises and errors is extremely deteriorated in reliability of a signal included therein. For the purpose of estimating a phase deviation amount in such an OFDM symbol, reliability of the phase correction process may be low with only the estimated phase deviation amount obtained from the pilot signals in the symbols. Therefore, the phase compensating circuit 994 uses an average value of accumulated phase correction information obtained so far.

However, the conventional solutions described above have the following three problems.

(First problem)

In order to mitigate phase errors occurring due to the first through fourth factors simultaneously, a phase correcting process, that is, a vector rotating process, has to be carried out twice onto the reception signal. That is, the transmission estimating circuit 203 and the phase compensating circuit 204 respectively perform such a process. This disadvantageously increases the hardware structure of the OFDM communications apparatus.

(Second problem)

In the conventional solutions to phase deviation occurring due to the second, third, and fourth factors, an estimated phase deviation amount in the OFDM symbol is calculated by the accumulative average value from the head of the packet. Therefore, if an OFDM symbol having a large noise was once transmitted, the estimated phase deviation value obtained from such symbol is less reliable and constantly affects the subsequent estimated values. Furthermore, the above estimated phase deviation value is located much later/earlier in time than the OFDM symbol to be now processed, and therefore is assumed to have less correlation with the phase correction amount to be ultimately obtained, but nevertheless affects the subsequent estimated values. For the above reasons, the phase correction amount estimated by calculating an estimated value from the accumulative average value lacks accuracy. Thus, this phase correction process is not effective.

(Third problem)

In the solution to phase errors occurring due to the first factor, a process of estimating a transmission function affected by multipath fading is performed only once at the head of a long packet. The value obtained from this estimating process is applied to an OFDM symbol subsequent in time. Therefore, this solution cannot follow changes in the state of multipath during packet transfer, that is, changes in the transmission function indicative of the state of the transmission path. Thus, the phase correcting process according to this scheme will gradually lose accuracy.

SUMMARY OF THE INVENTION

Therefore, an object of the present invention is to provide an OFDM communications apparatus for achieving a highly-accurate phase correcting process without gradually losing accuracy or requiring large hardware.

The present invention has the following features to attain the object above.

A first aspect of the present invention is directed to an OFDM communications apparatus for correcting a phase of a vector obtained by performing a Fast Fourier Transform (FFT) process on a received OFDM signal, including:

a phase calculating unit for calculating the phase of the vector;
a phase correction information estimating unit for calculating an estimated phase deviation value for each of a plurality of factors causing phase deviation by comparing, with a known phase, the phase of the vector calculated by the phase calculating unit for each of a plurality of known signals included in the OFDM signal;
an adding unit for adding together a plurality of said estimated phase deviation values calculated by the phase correction information estimating unit, and outputting the addition result as a total phase correction value; and
a vector phase rotator for rotating the phase of the vector by the total phase correction value outputted from the adding unit, and outputting the vector with the corrected phase.

As described above, in the first aspect, an estimated phase deviation value is calculated for each factor, and the calculated phase deviation values are added to obtain a total phase correction value. With the total phase correction value, the phases of the received vector signals are collectively rotated. Therefore, compared with a case where the phase is rotated for each factor, it is possible to reduce the size of hardware required for phase correction. With this, the above-mentioned first problem can be solved.

Preferably, the phase correction information estimating unit calculates the estimated phase deviation value by calculating a weighted average of an estimated phase deviation value obtained from a known signal included in an OFDM symbol to be demodulated and an estimated phase deviation value obtained from a known signal included in an OFDM symbol other than the OFDM symbol to be demodulated.

With this, an estimated phase deviation value is calculated from an OFDM symbol other than the OFDM symbol to be demodulated to obtain a weighted average, thereby calculating an ultimate estimated phase deviation value. Therefore, when phase deviation is estimated, it is possible to disperse effects of the phase deviation amount estimated from an OFDM symbol having large noise. For example, it is possible to avoid the estimated phase deviation value from being degraded in reliability when the OFDM symbol to be demodulated has large noise. Thus, the above-mentioned second problem can be solved.

More preferably, the phase correction information estimating unit calculates a weighted average by increasing a weight value applied to an estimated phase deviation value obtained from an OFDM symbol closer to the OFDM symbol to be demodulated.

In this case, the estimated phase deviation value obtained from an OFDM symbol closer to the OFDM symbol to be demodulated this time is applied with a larger weight to calculate a weighted average. Therefore, it is possible to reduce effects of the estimated phase deviation value estimated from an OFDM symbol that is supposed to have less correlation in view of the estimated phase deviation value. Thus, errors in the total phase correction value can be reduced, thereby improving communications quality. With this, the above-mentioned second problem can be solved.

For example, the estimated phase deviation value obtained from the known signal included in the OFDM symbol other than the OFDM symbol to be demodulated may be an estimated phase deviation value obtained from at least one OFDM symbol for a predetermined section previous to the OFDM symbol to be demodulated.

In this case, the estimated phase deviation value obtained from OFDM symbols for a predetermined section that are previous to the OFDM symbol to be demodulated is used for obtaining a weighted average. Therefore, effects of a less-reliable estimated phase deviation value estimated from the OFDM symbol having large noise will be cut sooner or later. Thus, the above-mentioned second problem can be solved.

Also, the estimated phase deviation value obtained from the known signal included in the OFDM symbol other than the OFDM symbol to be demodulated may be an estimated phase deviation value obtained from all OFDM symbols previous to the OFDM symbol to be demodulated.

In this case, the estimated phase deviation values obtained from all OFDM symbols previous to the OFDM symbol to be demodulated are used. Therefore, effects of the estimated phase deviation value with low reliability estimated from the OFDM symbol having large noise can be reduced. Thus, the above-mentioned second problem can be solved.

Furthermore, the estimated phase deviation value obtained from the known signal included in the OFDM symbol other than the OFDM symbol to be demodulated is an estimated phase deviation value obtained from at least one OFDM symbol subsequent to the OFDM symbol to be demodulated.

In this case, the phase deviation values estimated from the OFDM symbols subsequent to the OFDM symbol to be demodulated (to be phase-corrected) are taken into consideration. Therefore, changes in phase deviation with time can be followed, thereby improving accuracy of the total phase correction value and communications quality. Thus, the above-mentioned second problem can be solved.

Still further, the estimated phase deviation value obtained from the known signal included in the OFDM symbol other than the OFDM symbol to be demodulated may be an estimated phase deviation value obtained from at least one OFDM symbol previous to the OFDM symbol to be demodulated and at least one OFDM symbol subsequent to the OFDM symbol to be demodulated.

In this case, the phase deviation value estimated from the OFDM symbols previous to and subsequent to the OFDM symbol to be demodulated are used for obtaining an ultimate estimated phase deviation value. Therefore, changes in phase deviation with time can be followed, thereby improving accuracy of the total phase correction value and communications quality. Thus, the above-mentioned second problem can be solved.

Preferably, the OFDM communications apparatus further includes a reception state discriminating unit for discriminating a state of reception of the received OFDM signal, wherein

the reception state discriminating unit changes a weight value of the weighted average calculated by the phase correction information estimating unit in accordance with the state of reception of an OFDM symbol included in the received OFDM signal.

With this, the state of reception of the reception signal is discriminated. In accordance with the state of reception, the weight value is changed. Therefore, effects of a the phase deviation value estimated from a less-reliable OFDM symbol can be reduced. Also, effects of a phase deviation value estimated from a highly-reliable OFDM symbol can be increased. This makes phase correction more reliable and more accurate, thereby improving communications quality. Thus, the above-mentioned second problem can be solved.

Still further, the OFDM communications apparatus further includes

a re-encoding unit for regularly re-encoding an OFDM symbol after demodulation, wherein

the phase calculating unit calculates a phase of a vector for the OFDM symbol re-encoded by the re-encoding unit, and

the phase correction information estimating unit corrects the calculated, estimated phase deviation value, based on the phase of the vector calculated by the phase calculating unit for each of a plurality of known signals included in the re-encoded OFDM symbol.

With this, the demodulated data is regularly re-encoded for serving as a reference to the reception signal. Therefore, it is possible to always obtain the latest information about the effects of a transmission path to the signal. Thus, the estimated phase deviation value, such as the multipath-fading phase deviation amount, that is determined not so often can be updated. This makes phase correction more reliable and more accurate, thereby improving accuracy of the estimated phase deviation value and communications quality. Thus, the above-mentioned third problem can be solved.

In a preferred embodiment, the phase calculating unit calculates the phase of the vector only for the known signals.

With this, only the phase of the vector signal for the known signals is required to be calculated. This reduces processing load on the apparatus.

Furthermore, in another preferred embodiment, the phase correction information estimating unit uses a polarity reverser for performing comparison with the known phase.

The use of the polarity reverser enables easy calculation of an estimated phase deviation value.

A second aspect of the present invention is directed to the OFDM communications apparatus based on the first aspect, wherein

the plurality of factors causing phase deviation are classified into multipath-fading and non-multipath-fading,

the OFDM signal includes a known symbol for estimating phase errors occurring due to the multipath fading and a plurality of known pilot signals included in each data symbol,

the phase correction information estimating unit includes:

a first estimated phase deviation value calculating unit for calculating an estimated multipath-fading deviation value by subtracting the known phase from a phase of a vector for the known symbol for estimating the phase errors;
a pilot signal phase deviation amount calculating unit for calculating an amount of phase deviation occurring in the pilot signals due to non-multipath-fading by subtracting the known phase and the estimated multipath-fading deviation value from a phase of a vector for each of the known pilot signals; and
a second estimated phase deviation value calculating unit for calculating an estimated non-multipath-fading deviation value of each OFDM symbol by finding a line for estimating phase deviation occurring due to the non-multipath fading based on the amount of phase deviation calculated by the pilot signal phase deviation amount calculating unit, and

the adding unit adds the estimated multipath-fading deviation value and the estimated non-multipath-fading deviation value together for calculating the total phase correction value.

According to the above second aspect, the estimated multipath-fading deviation value and the estimated non-multipath-fading deviation value are added together to calculate a total phase correction value for collective phase correction. With this, the size of hardware can be reduced. Thus, the above-mentioned first problem can be solved.

In one preferred embodiment, the second estimated phase deviation value calculating unit calculates the estimated non-multipath-fading deviation value by calculating a weighted average of at least one parameter of a line obtained from pilot signals included in the OFDM symbol to be demodulated and at least one parameter of a line obtained from pilot signals included in an OFDM symbol other than the OFDM symbol to be demodulated.

Furthermore, preferably, the second estimated phase deviation value calculating unit calculates the weighted average by increasing a weight value to at least one parameter obtained from a pilot signal closer to a pilot signal included in the OFDM symbol to be demodulated.

Still further, the second estimated phase deviation value calculating unit calculates the weighted average by storing at least one parameter obtained from pilot signals included in an OFDM symbol previous to the OFDM symbol to be demodulated as a parameter of the line obtained from the pilot signals included in the OFDM symbol other than the OFDM symbol to be demodulated.

Furthermore, the OFDM communications apparatus further includes:

a vector storing unit for temporarily storing vectors of the OFDM symbol to be demodulated; and
a control unit for first giving vectors of the pilot signals from among the vectors of the OFDM symbol to be stored in the vector storage unit to the pilot signal phase deviation amount calculating unit, wherein
the pilot signal phase deviation amount calculating unit supplies, to the second phase deviation estimation value calculating unit, a phase deviation amount of the vectors of the pilot signals first given, and
based on the phase deviation amount of the pilot signals supplied by the pilot signal phase deviation amount calculating unit, the second estimated phase deviation value calculating unit stores a parameter obtained from an OFDM symbol subsequent to the OFDM symbol to be demodulated as the parameter of the line obtained from the pilot signals included in the OFDM symbol other than the OFDM symbol to be demodulated, and calculates the weighted average by using the parameter stored in the estimated second phase deviation value calculating unit and at least one parameter obtained from pilot signals included in an OFDM symbol previous to the OFDM symbol to be demodulated.

In this case, the estimated phase deviation value is calculated first based on pilot signals included in an OFDM symbol subsequent to the OFDM symbol to be demodulated.

Still further, the OFDM communications apparatus further includes:

a vector storing unit for temporarily storing vectors of the OFDM symbol to be demodulated; and
a control unit for first giving, from among the vectors of the OFDM symbol to be stored in the vector storage unit, vectors of the pilot signals to the pilot signal phase deviation amount calculating unit, wherein
the pilot signal phase deviation amount calculating unit calculates a phase deviation amount of the vectors for the pilot signals first given, and supplies the calculated phase deviation amount to the second estimated phase deviation value, and
based on the phase deviation amount of the pilot signals supplied by the pilot signal phase deviation amount calculating unit, the second estimated phase deviation value calculating unit calculates the weighted average by storing a parameter obtained from an OFDM symbol subsequent to the OFDM symbol to be demodulated as the parameter of the line obtained from the pilot signals included in the OFDM symbol other than the OFDM symbol to be demodulated.

In this case, the estimated phase deviation value is calculated first based on pilot signals included in an OFDM symbol subsequent to the OFDM symbol to be demodulated.

Still further, the OFDM communications apparatus further includes
a reception state discriminating unit for discriminating a state of reception of the received OFDM signal, wherein
the reception state discriminating unit changes a weight value of the weighted average calculated by the second estimated phase deviation value calculating unit in accordance with the state of reception of an OFDM symbol included in the received OFDM signal.

Still further, the OFDM communications apparatus further includes
a re-encoding unit for regularly re-encoding an OFDM symbol after demodulation, wherein
the phase calculating unit calculates a phase of a vector for the OFDM symbol re-encoded by the re-encoding unit, and
the pilot signal phase deviation calculating unit subtracts, from a phase of a vector included in the re-encoded OFDM symbol calculated by the phase calculating unit, a phase of a vector for pilot signals corresponding to the OFDM symbol and, based on the subtraction result, corrects the estimated multipath-fading deviation value.

A third aspect of the present invention is directed to an OFDM communications apparatus for correcting a phase of a vector obtained by performing a Fast Fourier Transform (FFT) process on a received OFDM signal, including:

a phase calculating unit for calculating the phase of the vector;
an estimated phase deviation value calculating unit for calculating a line of an estimated non-multipath-fading deviation value based on the phase of the vector for pilot signals calculated by the phase calculating unit, and then calculating an estimated phase deviation value for each OFDM symbol; and
a vector phase rotator for rotating the phase of the vector by the estimated non-multipath-fading deviation value calculated by the estimate phase deviation value calculating unit, and outputting the vector with the corrected phase, wherein
the estimated phase deviation value calculating unit calculates the estimated phase deviation value by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

According to the above third aspect, the estimated phase deviation value is calculated from OFDM symbols other than the OFDM symbol to be demodulated for calculating a weighted average. Therefore, when phase deviation is estimated, it is possible to disperse effects of the phase deviation amount estimated from OFDM symbols having large noise. For example, it is possible to avoid the estimated phase deviation value from being degraded in reliability when the OFDM symbol to be demodulated has large noise. Thus, the above-mentioned second problem can be solved.
Preferably, the estimated phase deviation value calculating unit calculates the weighted average of the parameters by storing a parameter of an estimation line obtained from pilot signals included in an OFDM symbol previous to the OFDM symbol to be demodulated as the parameter of the phase deviation estimation line obtained from the pilot signals included in the OFDM symbol other than the OFDM symbol to be demodulated.
With this, it is possible to reduce effects of a less-reliable phase deviation amount estimated from OFDM symbols having large noise.
Still further preferably, the OFDM communications apparatus further includes:

a vector storage unit for temporarily storing vectors for the OFDM symbol to be demodulated; and
a control unit for first giving, from among the vectors of the OFDM symbol to be stored in the vector storage unit, vectors of the pilot signals to the estimated phase deviation value calculating unit, wherein

the estimated phase deviation value calculating unit calculates a weighted average of a parameter of a phase deviation estimation line obtained from pilot signals included in an OFDM symbol subsequent to the OFDM symbol to be demodulated by storing the parameter of the phase deviation estimation line based on the pilot signals given first.
With this, changes in phase deviation with time can be followed, thereby improving accuracy of the total phase correction value and communications quality.
A fourth aspect of the present invention is directed to an OFDM communications apparatus for correcting a phase of a vector obtained by performing a Fast Fourier Transform (FFT) process on a received OFDM signal, including:

a phase calculating unit for calculating the phase of the vector;
an estimated phase deviation value calculating unit for calculating a line of an estimated multipath-fading deviation value based on the phase of the vector for a known symbol for estimating phase errors occurring due to multipath fading;
a vector phase rotator for rotating the phase of the vector by the estimated multipath-fading deviation value calculated by the estimate phase deviation value calculating unit, and outputting the vector with the corrected phase; and
a re-encoder for regularly re-encoding an OFDM symbol after demodulation, wherein

the phase calculating unit calculates a phase of a vector for the OFDM symbol re-encoded by the re-encoding unit, and
the estimated phase deviation value calculating unit subtracts, from the phase of the vector for pilot signals included in the OFDM symbol re-encoded by the phase calculating unit, the phase of the vector for pilot signals corresponding to the re-encoded OFDM symbol and, based on the subtraction result, corrects the estimated multipath-fading deviation value.
According to the above fourth aspect, the demodulated data is regularly re-encoded for serving as a reference to the reception signal. Therefore, it is possible to always obtain the latest information about the effects of a transmission path to the signal. Thus, the multipath-fading phase deviation amount can be updated. This can improve accuracy of the estimated phase deviation value and communications quality. Thus, the above-mentioned third problem can be solved.

A fifth aspect of the present invention is directed to a method for correcting a phase of a vector obtained by performing a Fast Fourier Transform (FFT) process on a received OFDM signal, the method including:

a step of calculating the phase of the vector;
a step of calculating an estimated phase deviation value for each of a plurality of factors causing phase deviation by comparing, with a known phase, the calculated phase of the vector for each of a plurality of known signals included in the OFDM signal;
a step of adding together a plurality of said calculated, estimated phase deviation values, and outputting the addition result as a total phase correction value; and
a step of rotating the phase of the vector by the total phase correction value, and outputting the vector with the corrected phase.

With the above fifth aspect, the above-mentioned first problem can be solved.

A sixth aspect of the present invention is directed to a method for correcting a phase of a vector obtained by performing a Fast Fourier Transform (FFT) process on a received OFDM signal, the method including:

a step of calculating the phase of the vector;
a step of calculating a line of an estimated non-multipath-fading deviation value based on the phase of the vector for pilot signals, and then calculating an estimated phase deviation value for each OFDM symbol; and
a step of rotating the phase of the vector by the calculated, estimated non-multipath-fading deviation value, and outputting the vector with the corrected phase, wherein

in the estimated phase deviation value calculating step, the estimated phase deviation value is calculated by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

With the above sixth aspect, the above-mentioned second problem can be solved.

A seventh aspect of the present invention is directed to a method for correcting a phase of a vector obtained by performing a Fast Fourier Transform (FFT) process on a received OFDM signal, the method including:

a step of calculating the phase of the vector;
a step of calculating a line of an estimated multipath-fading deviation value based on the phase of the vector for a known symbol for estimating phase errors occurring due to multipath fading;
a step of rotating the phase of the vector by the calculated, estimated multipath-fading deviation value, and outputting the vector with the corrected phase;
a step of regularly re-encoding an OFDM symbol after demodulation,
a step of calculating a phase of a vector of the re-encoded OFDM symbol; and
a step of subtracting, from the phase of the vector for pilot signals included in the re-encoded OFDM symbol, the phase of the vector for pilot signals corresponding to the re-encoded OFDM symbol and, based on the subtraction result, correcting the estimated multipath-fading deviation value.

With the above seventh aspect, the above-mentioned third problem can be solved.

An eighth aspect of the present invention is directed to a program to be executed on an OFDM communications apparatus for correcting a phase of a vector obtained by performing a Fast Fourier Transform (FFT) process on a received OFDM signal, the program including:

a step of calculating the phase of the vector;
a step of calculating an estimated phase deviation value for each of a plurality of factors causing phase deviation by comparing, with a known phase, the calculated phase of the vector for each of a plurality of known signals included in the OFDM signal;
a step of adding together a plurality of said calculated, estimated phase deviation values, and outputting the addition result as a total phase correction value; and
a step of rotating the phase of the vector by the total phase correction value, and outputting the vector with the corrected phase.

With the eight aspect, the above-mentioned first problem can be solved.

A ninth aspect of the present invention is directed to a program to be executed on an OFDM communications apparatus for correcting a phase of a vector obtained by performing a Fast Fourier Transform (FFT) process on a received OFDM signal, the program including:

 a step of calculating the phase of the vector;
 a step of calculating a line of an estimated non-multipath-fading deviation value based on the phase of the vector for pilot signals, and then calculating an estimated phase deviation value for each OFDM symbol; and
 a step of rotating the phase of the vector by the calculated, estimated non-multipath-fading deviation value, and outputting the vector with the corrected phase, wherein

 in the estimated phase deviation value calculating step, the estimated phase deviation value is calculated by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

With the ninth aspect, the above-mentioned second problem can be solved.

A tenth aspect of the present invention is directed to a program to be executed on an OFDM communications apparatus for correcting a phase of a vector obtained by performing a Fast Fourier Transform (FFT) process on a received OFDM signal, the program including:

 a step of calculating the phase of the vector;
 a step of calculating a line of an estimated multipath-fading deviation value based on the phase of the vector for a known symbol for estimating phase errors occurring due to multipath fading;
 a step of rotating the phase of the vector by the calculated, estimated multipath-fading deviation value, and outputting the vector with the corrected phase;
 a step of regularly re-encoding an OFDM symbol after demodulation,
 a step of calculating a phase of a vector of the re-encoded OFDM symbol; and
 a step of subtracting, from the phase of the vector for pilot signals included in the re-encoded OFDM symbol, a phase of a vector for pilot signals corresponding to the re-encoded OFDM symbol and, based on the subtraction result, correcting the estimated multipath-fading deviation value.

With the tenth aspect, the above-mentioned third problem can be solved.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a functional block diagram showing the construction of an OFDM communications apparatus 1 according to a first embodiment of the present invention;
FIG. 2 is a functional block diagram showing part of the internal structure of an Arctan vector phase rotator 104 in the OFDM communications apparatus 1;
FIG. 3 is a functional block diagram showing the construction of a phase correction information estimator 105;
FIG. 4 is a functional block diagram showing the internal construction of a phase deviation amount calculating circuit 703;
FIG. 5 is a functional block diagram showing the structure of a phase deviation amount calculating circuit in the OFDM communications apparatus 3 according to a third embodiment of the present invention;
FIG. 6 is a functional block diagram illustrating the entire construction of an OFDM communications apparatus 3 according to a third embodiment of the present invention;
FIG. 7 is a functional block diagram illustrating the entire construction of an OFDM communications apparatus 4 according to a fourth embodiment of the present invention;
FIG. 8 is a functional block diagram illustrating the structure of a phase correction information estimator 1202;
FIG. 9 is a functional block diagram illustrating the structure of a phase deviation amount calculating circuit 1301;
FIG. 10 is a functional block diagram illustrating the structure of a reception signal state discriminator 1201;
FIG. 11 is a functional block diagram illustrating the structure of an OFDM communications apparatus 5 according to a fifth embodiment of the present invention;
FIG. 12 is a flowchart showing the operation of an OFDM communications apparatus according to a sixth embodiment of the present invention;

FIG. 13 is a flowchart showing the operation of an OFDM communications apparatus according to a seventh embodiment of the present invention;

FIG. 14 is a flowchart showing the operation of an OFDM communications apparatus according to a eighth embodiment of the present invention;

FIG. 15 is a flowchart showing the operation of an OFDM communications apparatus according to a ninth embodiment of the present invention;

FIG. 16 is a flowchart showing the operation of an OFDM communications apparatus according to a tenth embodiment of the present invention;

FIGS. 17A and 17B are illustrations for describing phase errors occurring due to second to fourth factors;

FIG. 18 is a block diagram showing the construction of a conventional OFDM communications apparatus;

FIG. 19 is an illustration showing the structure of a communications packet; and

FIG. 20 is an illustration showing a distribution of a phase deviation amount of a signal when viewed in a frequency axis direction.

## DESCRIPTION OF THE PREFERRED EMBODIMENTS

(First embodiment)

FIG. 1 is a block diagram illustrating the construction of an OFDM communications apparatus 1 according to a first embodiment of the present invention. In FIG. 1, an OFDM communications apparatus 1 includes an antenna 101, a receiving circuit 102, an FFT circuit 103, an Arctan calculating vector phase rotator 104, a phase correction information estimator 105, an adder 106, and a demodulator/error corrector 107.

In the first embodiment, it is assumed that a communications packet having the structure illustrated in FIG. 19 is used as a signal for use in OFDM communications for estimating and compensating residual phase error by using a pilot symbol. That is, the packet signal for use in the first embodiment includes the header portion 206 including the symbol 207 for phase error estimation on the transmission path (the symbol 207 is hereinafter referred to as phase error estimation symbol 207) and the symbol 208 for another purpose other than the phase error estimation; and a plurality of transmission/reception data symbols that carry data (such data symbols are hereinafter referred to simply as data symbols) 211. Each data symbol 211 includes a plurality of phase error estimation pilot signals 209 equally spaced apart (such signals hereinafter referred to simply as pilot signals 209), and a plurality of pieces of transmission/reception data 210. In FIG. 19, the pilot signals 209 are represented by black rectangles, while the plurality of transmission/reception data 210 are represented by white rectangles. In FIG. 19, some data symbols 211 and transmission/reception data 210 do not have reference numerals for simplification. The communications packet illustrated in FIG. 19 is also used in other embodiments. Therefore, FIG. 19 is referred to also further below for descriptions of the other embodiments.

An OFDM signal received via an antenna 101 is subjected to a normal wireless receiving process to become a digital signal. This digital signal is supplied to the FFT (Fast Fourier Transform) circuit 103 for an FFT operation. The FFT circuit 103 outputs sub-carrier signal vectors (in-phase component and quadrature component) assigned to each sub-carrier for output to the Arctan vector phase rotator 104.

The Arctan vector phase rotator 104 has the following two functions: one is a function of performing an Arctan calculating process for calculating Arctan of a phase of a vector supplied by the FFT circuit 103, and the other is a function of performing a vector phase rotating process for rotating the phase of the vector supplied by the FFT circuit 103 based on the phase correction amount supplied by the adder 106. These two functions are achieved by a CORDIC algorithm, which will be described further below. Also, as will be described further below, most of the circuit configuration can be shared for achieving these two functions.

The Arctan vector phase rotator 104 performs an Arctan calculating process to find a phase of a vector of the known signal included in the phase error estimation symbol 207 (such a vector is hereinafter also referred to as a known signal vector), and supplies the found phase to the phase correction information estimator 105.

As illustrated in FIG. 19, the sub-carrier signal vectors are classified by two categories: vectors corresponding to the pilot signals 209 (such vectors are hereinafter referred to as pilot signal vectors), and vectors corresponding to the transmission/reception data 210 (such vectors are hereinafter referred to as data vectors). Of these sub-carrier signal vectors, the Arctan vector phase rotator 104 finds the phases of the pilot signal vectors by performing an Arctan calculating process, and supplies the found phases to the phase correction information estimator 105. Of the sub-carrier signal vectors, the phases of the known signal vectors and the pilot signal vector are found by the Arctan vector phase rotator 104 at timing regularly provided by a control circuit (not shown) and a switch circuit (not shown).

The known signal vector has a reference phase previously provided thereto. The phase correction information estimator 105 compares the phase of the known signal vector actually received with the reference phase to find a phase deviation amount of the received known signal vector. This phase deviation amount indicates estimated effects occurring on the phase of the signal due to multipath fading (due to the above-mentioned first factor). This estimated phase deviation amount is hereinafter called an estimated multipath-fading deviation value. The phase correction information estimator 105 temporarily stores the estimated multipath fading deviation value in memory, and supplies the stored value to the adder 106 as required.

The pilot signal vector has also a reference phase previously provided thereto. The phase correction information estimator 105 compares the phase of the pilot signal vector actually received with the reference phase to calculate a phase deviation amount of the received pilot signal vector. The phase correction information estimator 105 subtracts the estimated multipath-fading deviation value stored in memory from the calculated phase deviation amount of the pilot signal vector to find an estimated value of phase deviation occurring due to the second, third, and fourth factors (such an estimated value is hereinafter referred to as an estimated non-multipath-fading deviation value). Then, the phase correction information estimator 105 finds a linear function equation of the phase deviation amount on a plane of the frequency vs. the phase deviation amount as illustrated in FIG. 20 to calculate a phase correction amount for each sub-carrier for output to the adder 106.

The adder 106 adds the estimated multipath-fading deviation value and the estimated non-multipath-fading deviation value together, and inputs the addition value to the Arctan vector phase rotator 104. This addition value is called a total phase correction value.

The Arctan vector phase rotator 104 performs a vector phase rotating process to rotate the phase of the data vector received from the FFT circuit 103 with the total phase correction value received from the adder 106. With this process, phase deviation which are included in the data vector and which occurs due to a plurality of factors are collectively corrected. Then, the Arctan vector phase rotator 104 forwards the corrected data vector to the demodulator/error corrector 107.

The demodulator/error corrector 107 performs a demodulating process and an error correcting process on the corrected data vector forwarded by the Arctan vector phase rotator 104, and then outputs the data.

Functions of the Arctan vector phase rotator 104 are described below in detail. These functions include a function of performing a vector rotating process and a function of performing an Arctan calculating process. The Arctan vector phase rotator 104 is hardware capable of processing the CORDIC algorithm, calculating the phase of an input vector and appropriately rotating the phase. For the purpose of simply rotating the phase of a complex vector by θ, the phase of the complex vector is multiplied by a unit circle vector represented as (cosθ + jsinθ). In this multiplication scheme, tables for sinθ and cosθ are required. These tables, however, become voluminous with the square of required calculation accuracy. Moreover, complex multiplication is required for rotation, and therefore hardware for such complex multiplication is also required. In order to avoid such inconveniences, the CORDIC algorithm repeats complex multiplication onto the input vector with a sign of a complex vector varied as shown in the following Equation 1, thereby rotating the input vector by a requested angle. Complex vectors for use in the CORDIC algorithm are shown in the following Table 1.

[Equation 1]

$$\left( 1 + j\frac{1}{2^n} \right) ,\ (\ n = 0, 1, 2, \cdots\ ) \qquad \cdots \text{(EQUATION 1)}$$

[Table 1]

| n | MULTIPLIER VECTOR VALUE | MULTIPLIER AMPLITUDE | VECTOR ANGLE MULTIPLE |
|---|---|---|---|
| 0 | 1±j | ±45.0 | ×1.414 |
| 1 | 1±j/2 | ±26.6 | ×1.118 |
| 2 | 1±j/4 | ±14.0 | ×1.030 |
| 3 | 1±j/8 | ±7.1 | ×1.007 |
| 4 | 1±j/16 | ±3.6 | ×1.002 |
|  |  |  |  |

[Table 1]   (continued)

| n | MULTIPLIER VECTOR VALUE | MULTIPLIER AMPLITUDE | VECTOR ANGLE MULTIPLE |
|---|---|---|---|
| total | - | - | ×1.646 |

By way of example only, a case where an input vector (1, 0) is rotated by 30 degrees is described below, with reference to the following Table 2 showing how the rotating process is performed.

[Table 2]

| n | MULTIPLIER VECTOR VALUE | MULTIPLIER VECTOR ANGLE | TOTAL PHASE DEVIATION | AMPLITUDE MULTIPLE |
|---|---|---|---|---|
| 0 | 1+j | +45 | 45.0 | ×1.414 |
| 1 | 1-j/2 | -26.6 | 18.4 | ×1.118 |
| 2 | 1+j/4 | +14.0 | 32.4 | ×1.030 |
| 3 | 1-j/8 | -7.1 | 25.3 | ×1.007 |
| 4 | 1+j/16 | +3.6 | 28.9 | ×1.002 |
|  |  |  |  |  |
| total | - | - | 30.0 | ×1.646 |

Here, a required phase of rotation is 30 degrees. In this case, the Arctan vector phase rotator 104 first multiplies the input vector by a multiplier vector value (1 + j) corresponding to n = 0 in Table 2 to rotate the input vector by 45 degrees counterclockwise. This rotation causes the phase of the input vector to be rotated too much, compared with the required angle of rotation, that is, 30 degrees. Therefore, in the next step, the Arctan vector phase rotator 104 multiplies the input vector by a multiplier vector value (1 - j/2) to rotate the input vector by 26.6 degrees clockwise. In this step, a phase displacement of the input vector is 18.4 degrees, and an amplitude thereof becomes 1.580 times (1.414 X 1.118) larger than the original amplitude.

As such, with the CORDIC algorithm, the Arctan vector phase rotator 104 compares the total amount of rotation of the input vector with the required amount of rotation to make the total amount of rotation gradually closer to the required amount of rotation. With this, the Arctan vector phase rotator 104 rotates the phase of the input vector by the angle originally requested so that the amplitude thereof becomes approximately 1.646 times. Finally, the Arctan vector phase rotator 104 multiplies the real part and the imaginary part by 0.607 (= 1/1.646) to correct the amplitude, and then ends the vector phase rotating process.

An input vector's Arctan calculating process is described below. This process is to merely make the phase of the input vector closer to 0 degree. Therefore, the vector phase rotating process and the vector Arctan calculating process can be carried out by approximately the same circuit.

In each vector phase rotating process, the Arctan vector phase rotator 104 compares the total amount of vector rotation with the required amount of vector rotation to determine the next direction of rotation, thereby making the phase of the input vector closer to the required phase. By contrast, in each Arctan calculating process, the Arctan calculating vector phase rotator 104 checks a sign of the imaginary part (Y coordinate on an X-Y plane) of the input vector to determine whether the phase of the input vector is over or under 0 degree, thereby determining the sign at the next rotating process. This makes the phase of the input vector gradually closer to 0 degree. After the rotating process has been repeated for a predetermined number of times, the Arctan calculating vector phase rotator 104 checks the total amount of phase rotation of the input vector to find an Arctan of the input vector. The Arctan calculating process is different from the vector phase rotating process only in that conditions for determining the sign in each rotating process. Therefore, most of hardware can be shared to perform the vector phase rotating process and the Arctan calculating process.

Advantages of using the CORDIC algorithm for the vector phase rotating process and the Arctan calculating process are described below. A first advantage is that the size of a table to be prepared is proportional to required bit accuracy. When 16-bit accuracy is required for the calculation results, the number of vectors in the table to be prepared is as few as 17. A second advantage is that the complex multiplying process for vector phase rotation is achievable only by an adding/subtracting process and a shifting process. With this, compared with a case where a multiplying process is performed, the required size of hardware can be substantially smaller.

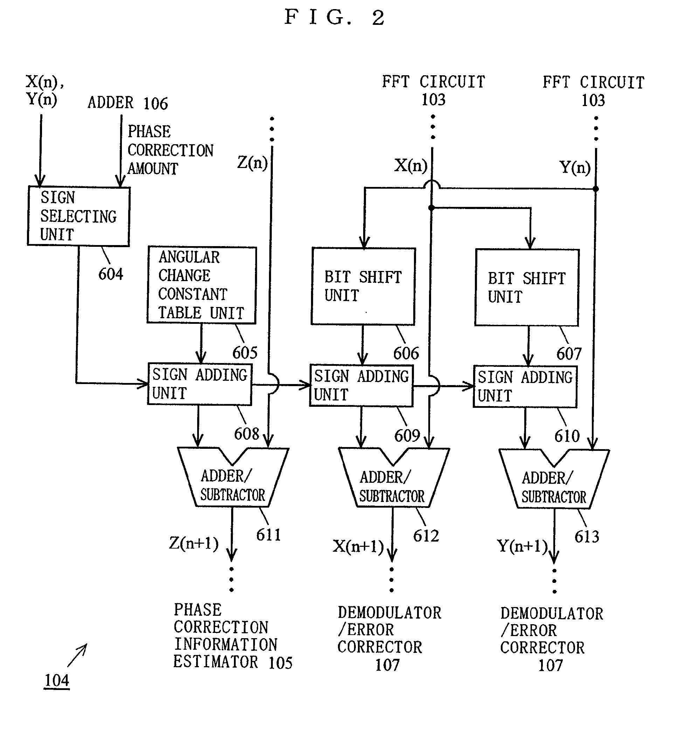

FIG. 2 is a functional block diagram illustrating part of the internal structure of the Arctan vector phase rotator 104 in the OFDM communications apparatus 1. The entire Arctan vector phase rotator 104 is structured so as to include a plurality of circuits illustrated in FIG. 2 that are connected in a pipeline-like form. Alternatively, the entire Arctan vector phase rotator 104 can be structured so that outputs from adders/subtractors 611, 612, and 613 are fed back to their respective inputs.

In FIG. 2, the Arctan calculating vector phase rotator 104 includes a sign selector 604, an angular change constant table unit 605, bit shifters 606 and 607, sign adders 608, 609, and 610, and the adders/subtractors 611, 612, 613.

In an Arctan calculating process, the sign selector 604 refers to the Y coordinate of a vector (X(n), Y(n)) to change a sign for output to the sign adders 608, 609, and 610. On the other hand, in a vector rotating process, the sign selector 604 compares the amount of phase correction supplied by the adder/subtractor 106 with the phase of the vector (X(n), Y(n)) to change the sign for output to the sign adders 608, 609, and 610.

The angular change constant table unit 605 stores a group of complex vectors as illustrated in Table 1.

One input to the adder/subtractor 611 is the total amount of rotation Z(n) obtained after the rotation process has been performed by n stages. Calculation of the total amount of rotation Z (n) is performed by a total rotation amount calculator (not shown). The other input to the adder/subtractor 611 is an angle with the sign added by the sign adder 608 to the multiplier vector angle stored in the angular change constant table unit 605. The adder/subtractor 611 adds the angle received from the sign adder 608 to the amount of rotation obtained after n stages, and then outputs the result as the total amount of rotation after n+1 stages.

One input to the adder/subtractor 612 is an X coordinate of the input vector after the rotation process has been performed by n stages. The other input to the adder/subtractor 612 is a value obtained by the sign adder 609 adding the sign to the Y coordinate of the input vector that has been subjected to the rotating process by n stages and then to bit shifting. The adder/subtractor 612 outputs these two inputs as an X coordinate after n+1 stages.

One input to the adder/subtractor 613 is a Y coordinate of the input vector after the rotation process has been performed by n stages. The other input is a value obtained by the sign adder 610 adding the sign to the X coordinate of the input vector that has been subjected to the rotating process by n stages then bit shifting. The adder/subtractor 613 adds these inputs together, and then outputs the addition result as a Y coordinate after n+1 stages.

The bit shifters 606 and 607, the sign adder 609 and 610, and the adder/subtractor 612 and 613 achieve a process of complex multiplication of a complex vector to be used for multiplication at n+1 stages. Note that such a complex vector is stored in the angular change constant table unit 605, and FIG. 2 does not shown any arrows indicative of flows of the complex vector from the angular change constant table unit 605 to the bit shifters 607 and 607.

In the Arctan calculating process, the Arctan vector phase rotator 104 supplies an output (total amount of rotation) from the adder/subtractor 611 after the last stage to the phase correction information estimator 105. A block for supplying the total amount of rotation to the phase correction information estimator 105 is not shown in FIG. 2.

In the vector phase rotating process, the Arctan vector phase rotator 104 unitizes outputs from the adder/subtractors 612 and 613 at the last stage of phase rotation performed based on the amount of phase correction. That is, the Arctan vector phase rotator 104 multiplies these outputs by an inverse of an amplitude multiple. The Arctan vector phase rotator 104 then outputs the result as a vector after phase rotation to the demodulator/error corrector 107. A block for performing vector unitization is not shown in FIG. 2.

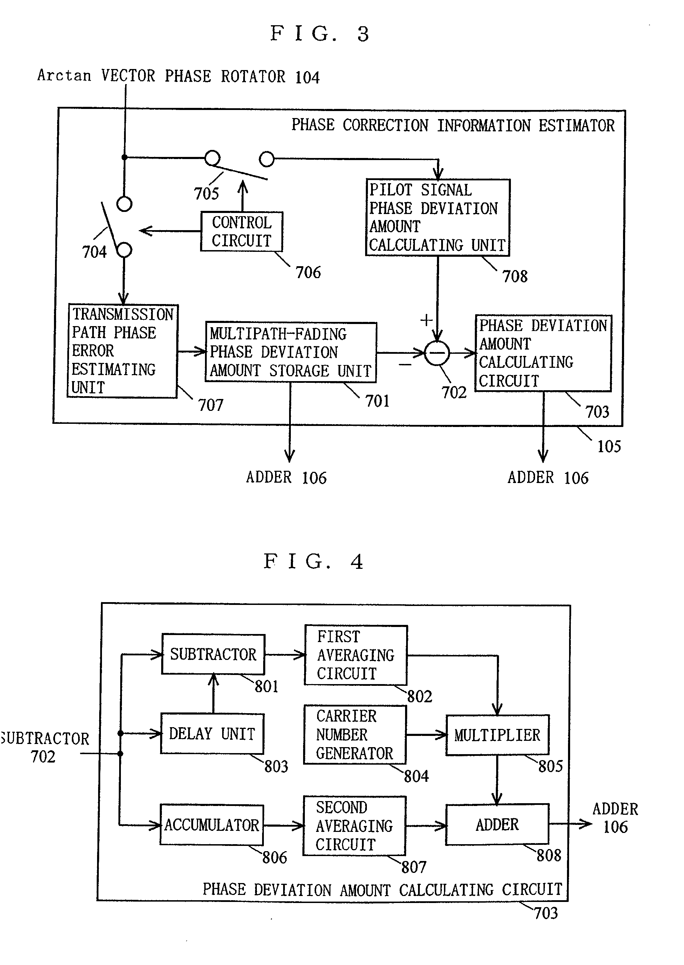

FIG. 3 is a functional block diagram illustrating the structure of the phase correction information estimator 105. In FIG. 3, the phase correction information estimator 105 includes a multipath-fading phase deviation amount storage unit 701, a subtractor 702, a phase deviation amount calculation circuit 703, switching circuits 704 and 705, a control circuit 706, a transmission path phase error estimator 707, a pilot signal phase deviation amount calculator 708. The phase correction information estimator 105 excludes an estimated multipath-fading deviation value from the phase deviation amount of a pilot signal vector to calculate an estimated non-multipath-fading deviation value.

At the time of starting communications, while the phase error estimation symbols 207 are being transmitted, the control circuit 706 closes the switch circuit 704 and opens the switching circuit 705. Furthermore, while data vectors and the pilot signals are being transmitted, the control circuit 706 closes the switching circuit 705 and opens the switching circuit 704. For cases other than the above-mentioned cases, the control circuit 706 opens both the switching circuits 704 and 705.

While the switching circuit 704 is being closed, the phase of the known signal vector is supplied to the transmission path phase error estimator 707. The transmission path phase error estimator 707 compares the phase of the input known signal vector with the known phase of the known signal vector to calculate an estimated multipath-fading deviation value, and stores the calculated value in the multipath phase deviation amount storage unit 701.

While the switching circuit 705 is being closed, the phase of the pilot signal vector is supplied to the pilot signal phase deviation amount calculating unit 708. The pilot signal phase deviation amount calculating unit 708 compares the phase of the input pilot signal vector with the known phase of the pilot signal vector previously stored to calculate an amount of phase deviation of the pilot signal.

The subtracter 702 subtracts an estimated multipath-fading deviation value stored in the multipath-fading phase deviation amount storage unit 701 from the amount of phase deviation of the pilot signal supplied by the pilot signal phase deviation amount calculating unit 708 for output to the phase deviation amount calculating circuit 703. With this, the subtractor 702 outputs an amount of phase deviation obtained by excluding an estimated multipath-fading deviation value from the amount of phase deviation of the pilot signal.

FIG. 4 is a functional block diagram illustrating the internal structure of the phase deviation amount calculating circuit 703. In FIG. 4, the phase deviation amount calculating circuit 703 includes a subtractor 801, a first averaging circuit 802, a carrier number generator 804, a multiplier 805, an accumulator 806, a second averaging circuit 807, and an adder 808. As already described with reference to FIG. 20, the phase deviation amount calculating circuit 703 linearly interpolates the amount of phase deviation having excluded therefrom the multipath-fading deviation amount between the pilot signals. With such linear interpolation process, the amount of phase deviation of the data vectors aligned between the pilot signals is estimated, and an estimated non-multipath-fading deviation value is calculated.

The delay unit 803 delays the amount of phase deviation of the pilot signal vector supplied by the subtractor 702 for output to the subtractor 801. Based on the amount of phase deviation of the pilot signal vector supplied by the subtractor 702 and the amount of phase deviation of the pilot signal vector delayed and then supplied by the delay unit 803, the subtractor 801 calculates a difference in phase deviation between adjacent pilot signals, and then supplies the calculation result to the first averaging circuit 802.

The first averaging circuit 802 calculates an average value of phase deviation amounts per data symbol for output to the multiplier 805. This average value of phase deviation amounts is a value indicative of a tilt of an estimation line for the amount of phase deviation illustrated in FIG. 20.

The accumulator 806 accumulates the amounts of phase deviation of all pilot signals in a single data symbol for output to the second averaging circuit 807. The second averaging circuit 807 averages the received amounts of phase deviation, and then outputs an average value to the adder 808. This average value is a value indicative of an intercept of the estimation line of phase deviation illustrated in FIG. 20.

With the above-mentioned process, the tilt value and the intercept value have been calculated. Then, the phase deviation amount calculating circuit 703 calculates a phase deviation amount for each data vector. This calculation can be performed by substituting a vector number assigned to each of the transmission/reception signal vectors supplied by the carrier number generator 804 for the phase deviation amount estimation line shown in FIG. 20.

The multiplier 805 multiplies the tilt value of the phase deviation amount estimation line by a vector number generated by the carrier number generator 804. The adder 808 adds the multiplication result obtained by the multiplier 805 and the intercept value of the line supplied by the second averaging circuit 807, and outputs a phase deviation amount for each data vector. This phase deviation amount is a non-multipath-fading estimated value.

The adder 106 adds the non-multipath-fading estimated value supplied by the phase deviation amount calculating circuit 703 and the multipath-fading estimated value stored in the multipath-fading phase deviation amount storage unit 703. The adder 106 then supplies to the Arctan vector phase rotator 104 a correction value for correcting phase deviation occurring due to the above first to fourth factors as a total phase correction value.

The Arctan vector phase rotator 104 rotates the vector supplied by the FFT circuit 103 by the total phase correction value supplied by the adder 106, and then outputs the vector with its phase deviation occurring due to the first to fourth factors being corrected to the demodulator/error corrector 107.

As such, in the first embodiment, an estimated multipath-fading deviation value and an estimated non-multipath-fading deviation value are both calculated, and added together to calculate a total phase correction value for correcting phase deviation occurring due to the first to fourth factors. Then, based on the total phase correction value, the vectors of the received signal are collectively corrected at one time. Therefore, compared with a conventional case where a phase rotating process is performed twice, it is possible to reduce the size of hardware and the amount of operations.

In the above embodiment, in order to compared the received vector with the know phase, the transmission path phase error estimating unit 707 and the pilot signal phase deviation amount calculating unit 708 are used. Alternatively , a polarity reverser can be used. Here, when a known vector $P$ having a phase of 30 degrees at the time of transmission is received as a vector $Q$ having a phase of 70 degrees, a difference between $P$ and $Q$ is a phase deviation amount caused on the transmission path. Therefore, the polarity reverser performs complex multiplication of a vector $R$ having a polarity reversed from that of the vector $P$ (that is, having a phase of -30 degrees) by the vector $Q$ to obtain a vector $S$ having a phase of 40 degrees. The polarity reverser then outputs the value of 40 degrees as the phase deviation amount caused on the transmission path.

The phase correction information estimator 105 can estimate a linear function equation of the phase deviation amount (that is, a phase deviation amount estimation line) by using a correlation between pilot signal vectors. More specifically, when $n$ pilot signal vectors are taken as PC(0)-PC(N-1), the phase correction information estimator 105 generates two vectors: vector $A$ = PC(0) + PC(1) + PC(2) + ... + PC(N-1) and vector $B$ = PC(0) X PC(1) + PC(1) X PC(2) + PC(2) X PC(3) + ... + PC(N-2) X PC(N-1) (where each multiplier is a conjugate complex) . The phase correction information estimator 105 then inputs these two vectors to the Arctan vector phase rotator 104 for Arctan calculation. With the use of angle A and angle B obtained through Arctan calculation, the phase correction information estimator 105 estimates a linear equation as $\theta = A \times f + B$. According this scheme, it is possible to reduce a phase weight on a pilot signal that has become less reliable due to its amplitude being reduced by multipath fading. This can improve the reliability of the estimated phase correction value obtained from the pilot signals.

Furthermore, the phase correction information estimator 105 can estimate the phase error correction amount of the transmission/reception vectors by using pilot signal vectors not only with the use of a scheme of linear approximation between pilot signal vectors but also with the use of a phase correction amount of an arbitrary pilot signal vector itself.

(Second embodiment)

An OFDM communications apparatus according to a second embodiment of the present invention is similar in entire construction to that according to the first embodiment. Therefore, FIG. 1 is also referred to in the second embodiment. For the purpose of estimating the phase correction information, the OFDM communications apparatus according to the second embodiment uses a weighted average value of the phase correction information obtained from an OFDM symbol to be demodulated and phase correction information obtained from OFDM symbols that have been demodulated at a previous section.

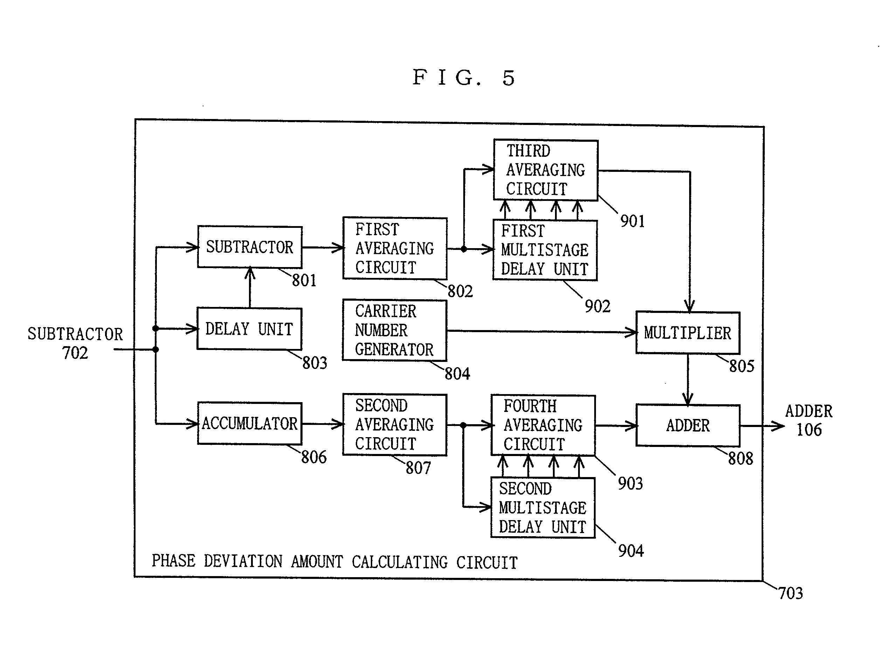

FIG. 5 is a functional block diagram illustrating the construction of a phase deviation amount calculating circuit in the OFDM communications apparatus according to the second embodiment. In FIG. 5, the phase deviation amount calculating circuit includes a subtractor 801, a first averaging circuit 802, a delay unit 803, a carrier number generator 804, a multiplier 805, an accumulator 806, a second averaging circuit 807, a third averaging circuit 901, a first multistage delay unit 902, a fourth averaging circuit 903, and a second multistage delay unit 904. In FIG. 5, portions having the same functions as those in the phase deviation amount calculating circuit 703 according to the first embodiment are provided with the same reference numerals, and are not described herein.

The first multistage delay unit 902 delays tilt values of the phase deviation line that have been obtained from several previous symbols for output to the third averaging circuit 901. The third averaging circuit 901 calculates a weighted average value of the delayed tilt values, and outputs the calculation result as a tilt value of a phase deviation amount estimation line for a symbol to be demodulated. A weight is provided to the tilt values so that a tilt value obtained from a pilot signal more closer to the OFDM symbol to be demodulated is provided with a larger weight. With this, an effect of previous large noise, for example, can be reduced.

The second multistage delay unit 904 delays intercept values of the phase deviation line that have been obtained from several previous symbols for output to the four averaging circuit 903. The third averaging circuit 903 calculates a weighted average value of the delayed intercept values, and outputs the calculation result as a intercept value of a phase deviation amount estimation line for the symbol to be demodulated. A weight is provided to the intercept values in a manner similar to that used in a case of the tilt values.

That is, in order to estimate the phase deviation amount estimation line, the phase deviation amount calculating circuit uses average values of tilt values and intercept values of a phase deviation amount estimation line that have been obtained from several previous symbols as a tilt value and a intercept value, respectively, of a phase deviation amount estimation line for a symbol to be demodulated.

As such, according to the second embodiment, phase correction amounts for previous several OFDM symbols (those previous to the OFDM symbol to be demodulated) and a phase correction amount calculated from the OFDM symbol to be demodulated are averaged to determine the total phase correction amount. Therefore, even if the OFDM symbol to be demodulated has temporal-burst noise for communications and therefore its reliability of the phase correction amount is extremely degraded, it is possible to perform a highly-reliable phase error correcting process.

(Third embodiment)

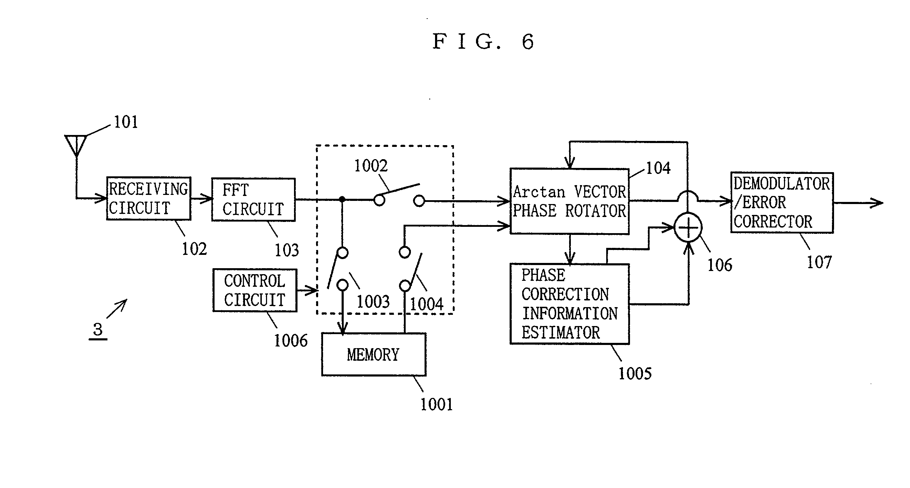

FIG. 6 is a functional block diagram illustrating the entire construction of an OFDM communications apparatus 3 according to a third embodiment of the present invention. In FIG. 6, the OFDM communications apparatus 3 includes the antenna 101, the receiving circuit 102, the FFT circuit 103, a control circuit 1006, switching circuits 1002, 1003, and 1004, a memory 1001, the Arctan phase rotator 104, a phase correction information estimator 1005, the adder 106, and the demodulator/error corrector 107. In FIG. 6, portions having functions similar to those of the OFDM communications apparatus 1 according to the first embodiment are provided with the same reference numerals, and are not described herein. Also, the phase correction information estimator 1005 has a function similar to that of the phase correction information estimator according to the second embodiment.

For the purpose of calculating the total phase correction value, the OFDM communications apparatus 3 uses a weighted average value of a total phase correction information obtained from an OFDM symbol to be demodulated and total phase correction values obtained from OFDM symbols previous and subsequent to the OFDM symbol to be demodulated.

When a pilot signal vector is produced from the FFT circuit 103, the control circuit 1006 connects the switching circuit 1002 and cuts off the switching circuit 1003. When a data vector is produced from the FFT circuit 103, the control circuit 1006 cuts off the switching circuit 1002, connects the switching circuit 1003, and then stores the data vector in the memory 1001. After an appropriate delay time has elapsed, the control circuit 1006 connects the switching circuit 1004, and then forwards the data vector stored in the memory 1001 to the Arctan vector phase rotator 104. This switching operation is performed based on predetermined timing.

With the above-mentioned switching operation performed by the control circuit 1006, a pilot signal vector is supplied to the Arctan vector phase rotator 104 before the corresponding data vector included in the OFDM symbol. Therefore, the phase correction information estimator 1005 first calculates phase correction information of the data vector to be demodulated (estimated multipath-fading deviation value and estimated non-multipath-fading deviation value). The calculated information is used together with a total phase correction value obtained from arbitrary OFDM symbols previous to and subsequent to the OFDM symbol to be demodulated, in order to calculate a weighted average value.

As such, in the third embodiment, for the purpose of estimating phase correction information, the phase correction information obtained from pilot signals included in the OFDM symbols subsequent to the OFDM symbol to be demodulated is used in order to calculate a total phase correction value. Therefore, in addition to the effects obtained from the second embodiment, it is possible to make the total phase correction value more accurately follow the phase deviation amount varied with time. Consequently, it is possible to perform a highly-reliable phase correction process.

By adjusting a timing at which the control circuit 1006 sends the transmission/reception signal vector stored in the memory 1001 to the Arctan vector phase rotator 104 and delay times provided by the first and second multistage delay units 902 and 904, it is possible to adjust a time range of the OFDM symbols to be used for estimating phase correction information.

The construction according to the third embodiment can be added to the construction according to the first embodiment. In this case, the Arctan vector phase rotator 104 is first supplied with a packet signal vector included in the OFDM symbol to be demodulated, and the phase correction information estimator 105 first performs a process of calculating phase correction information. With this, the adder 106 supplies the latest total phase correction value regarding the data vector to be demodulated to the Arctan vector phase rotator 104. Therefore, it is possible to perform a highly-reliable phase correcting process.

(Fourth embodiment)

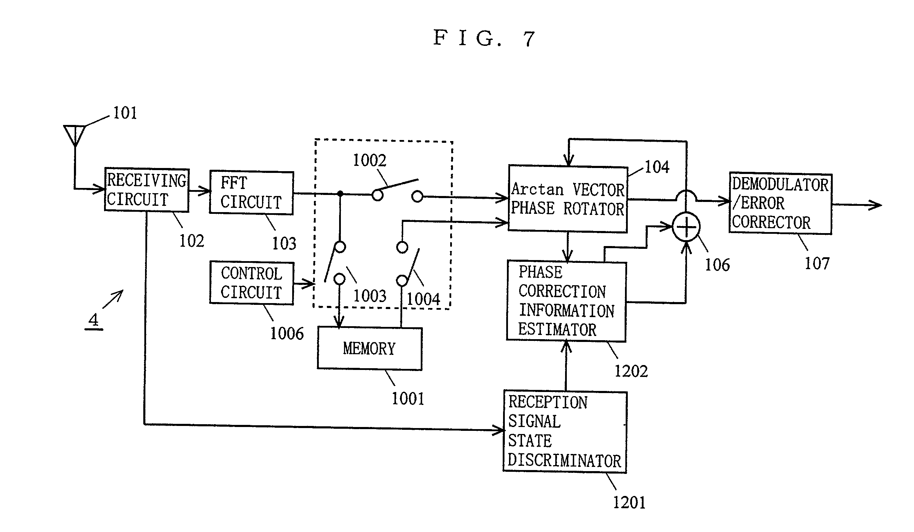

FIG. 7 is a functional block diagram illustrating the entire construction of an OFDM communications apparatus 4 according to a fourth embodiment of the present invention. In FIG. 7, the OFDM communications apparatus 4 includes the antenna 101, the receiving circuit 102, the FFT circuit 103, the control circuit 1006, the switching circuits 1002, 1003, and 1004, the memory 1001, the Arctan vector phase rotator 104, a phase correction information estimator 1202, a reception signal state discriminator 1201, the adder 106, and the demodulator/error corrector 107. In FIG. 7, portions having functions similar to those of the OFDM communications apparatus 3 according to the third embodiment are provided with the same reference numerals, and are not described herein.

In addition to the functions of the OFDM communications apparatus 3 according to the third embodiment, the OFDM communications apparatus 4 has a function of varying, based on the state of the reception signal, a weight value to be used for calculating a tilt value and an intercept value of the phase deviation amount estimation line.

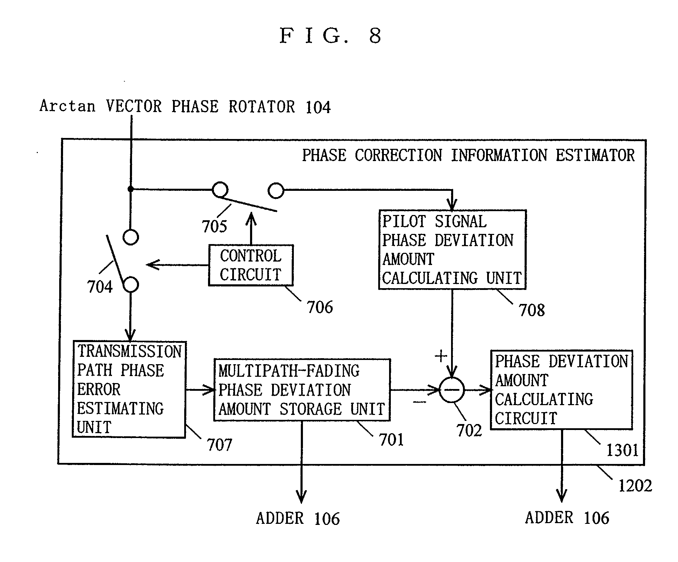

FIG. 8 is a block diagram illustrating the structure of the phase correction information estimator 1202. In FIG. 8, portions having functions similar to those of the phase correction information estimator 105 according to the first embodiment are provided with the same reference numerals, and are not described herein. In FIG. 8, the phase correction information estimator 1202 includes the multipath-fading phase deviation storage unit 701, the subtractor 702, a phase deviation amount calculating circuit 1301, the switching circuits 704 and 705, the control circuit 706, the transmission path phase error estimator 707, and the pilot signal phase deviation amount calculating unit 708.

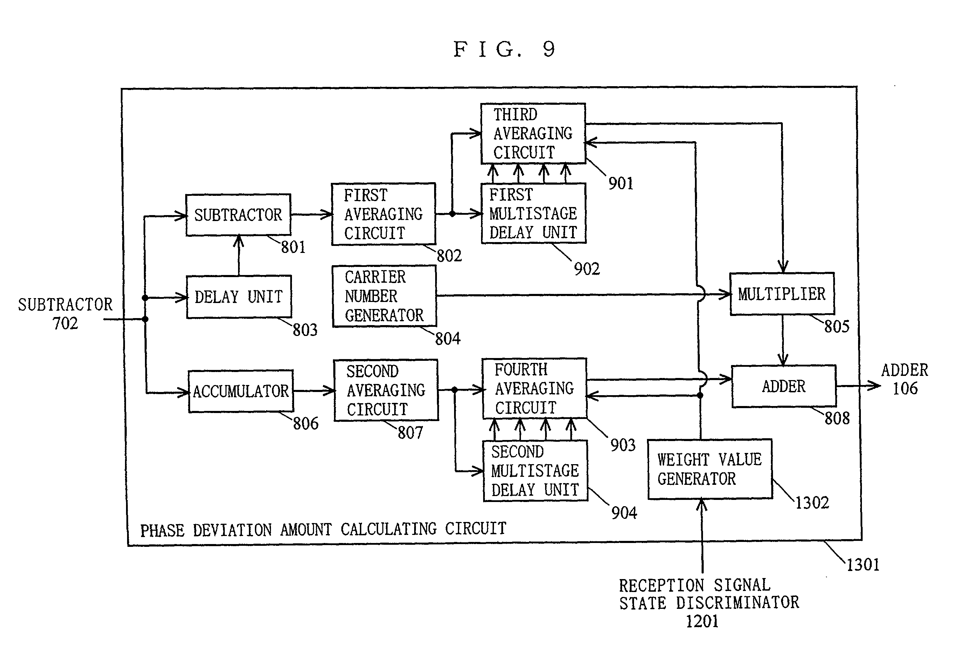

FIG. 9 is a functional block diagram showing the structure of the phase deviation amount calculating circuit 1301. In FIG. 9, the phase deviation amount calculating circuit 1301 includes the subtractor 801, the first averaging circuit 802, the delay unit 803, the carrier number generator 804, the multiplier 805, an accumulator 806, the second averaging circuit 807, the third averaging circuit 901, the first multistage delay unit 902, the fourth averaging circuit 903, the second multistage delay unit 904, and a weight value generator 1302. In FIG. 9, portions having functions similar to those of the phase deviation amount calculating circuit according to the second embodiment (refer to FIG. 5) are provided with the same reference numerals, and are not described herein.

The reception signal discriminator 1201 detects whether the state of reliability of the reception signal supplied by the receiving circuit 102 has been changed, for example, whether the power of the reception signal has been decreased. If the state of reception has been changed, the reception signal discriminator 1201 sends to the weight value generator 1302 a control signal for changing a weight value and an OFDM symbol number assigned to an OFDM symbol to which the weight value to be changed has been applied.

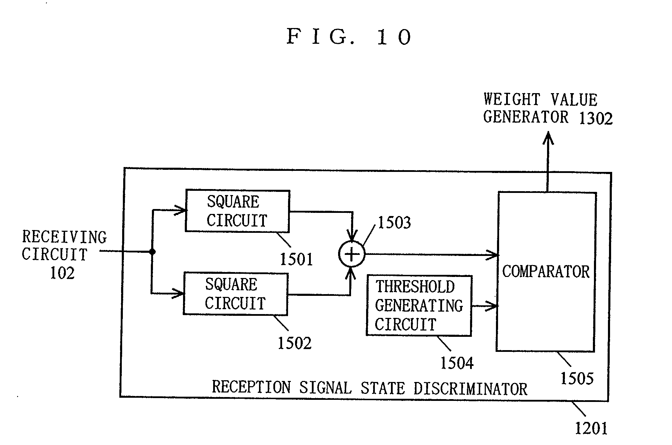

FIG. 10 is a functional block diagram illustrating the structure of the reception signal state discriminator 1201. In FIG. 10, the reception signal state discriminator 1201 includes square circuits 1501 and 1502, an adder 1503, a threshold generating circuit 1504, and a comparator 1505. Outputs from the square circuits 1501 and 1502 are added together in the adder 1503, thereby calculating the power of the reception signal. The comparator 1505 compares the power of the reception signal given by the adder 1503 with a threshold generated by the threshold generating circuit 1504. If the power of the reception signal is lower than the threshold, it is determined that the reliability of the reception signal is low. In this case, the comparator 1505 sends to the weight value generator 1302 a control signal for changing a weight value and an OFDM symbol number assigned to an OFDM symbol to which the weight value to be changed has been applied.

In response to the control signal from the reception signal state discriminator 1201, the weight value generator 1302 generates a small weight value for the OFDM symbol having the sent OFDM symbol number, and supplies the generated weight value to the third and fourth averaging circuits 901 and 903.

Based on the weight value supplied by the weight value generator 1302, the third and fourth averaging circuits 901 and 903 each determine a weight value to be applied to the phase of the pilot signal vector adjacent to the OFDM symbol having the OFDM symbol number, taking an average of parameters (tilt values and intercept values) of the phase deviation amount estimation line.

As such, in the fourth embodiment, of the weight values to be applied to tilt values and intercept values obtained from a series of pilot signal vectors, a weight value to be applied to those that have low reliability is decreased, thereby estimating the parameters of the phase deviation amount estimation line. Therefore, it is possible to provide an OFDM communications apparatus capable of increasing the reliability of the phase correction information and the effect of a phase correcting process.

In the fourth embodiment, the weight applied to the parameters of the phase deviation amount estimation line is changed. Alternatively, a weight to be applied to the phase deviation amount of each pilot signal vector can be set. With this, the phase deviation amount obtained from a highly-reliable pilot signal is extracted for estimating the phase correction amount.

(Fifth embodiment)

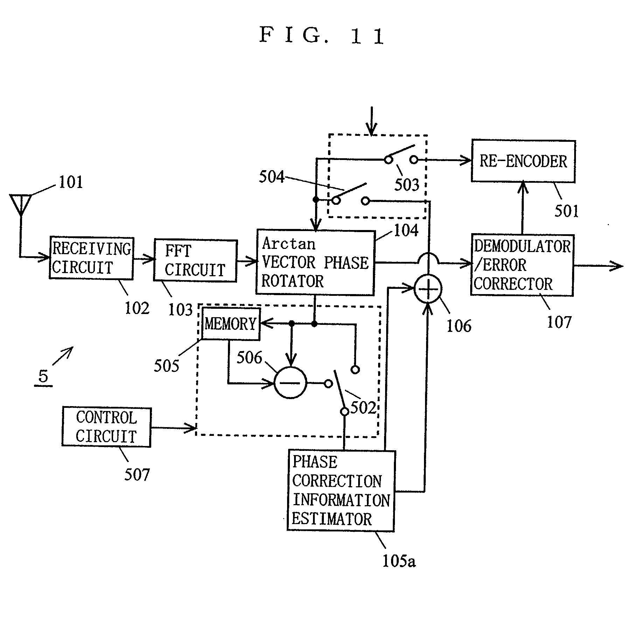

FIG. 11 is a functional block diagram illustrating the construction of an OFDM communications apparatus 5 according to a fifth embodiment of the present invention. In FIG. 11, the OFDM communications apparatus 5 includes the antenna 101, the receiving circuit 102, the FFT circuit 103, a control circuit 507, switching circuits 502, 503, and 504, a memory 505, a subtractor 506, the Arctan vector phase rotator 104, a phase correction information estimator 105a, the adder 106, the demodulator/error corrector 107, and a re-encoder 501. In FIG. 11, portions having functions similar to those of the OFDM communications apparatus 1 according to the first embodiment are provided with the same reference numerals, and are not described herein.

The OFDM communications apparatus 5 has a feature of updating the estimated multipath-fading deviation value.

The control circuit 507 controls opening and closing of the switching circuits 502, 503, and 504. The control circuit 507 also controls an operation of storing the phase of the vector in the memory 505 and the operation of the subtractor 506. Opening and closing of the switches are performed in accordance with predetermined rules. In FIG. 11, arrows indicative of control from the control circuit 507 to the switching circuits 503 and 504 are not shown.

The control circuit 507 regularly causes the phase of a vector (for example, the phase of the pilot signal vector) included in the received OFDM symbol to be stored in the memory 505. The re-encoder 501 re-encodes a vector obtained when the symbol whose phase is stored in the memory 505 is taken as an input of the demodulator/error corrector 107. With this, the re-encoder 501 generates an OFDM symbol for checking the phase of the vector stored in the memory 505.

When a re-encoding process is performed by the re-encoder 501, the control circuit 507 closes the switching circuit 503 to switch the switching circuit 502 to the side of the subtractor 506. Then, the Arctan vector phase rotator 104 calculates the phase of the OFDM symbol through Arctan calculation for output.

In response, the control circuit 507 causes the subtractor 506 to calculate a difference between the phase of the OFDM symbol and the phase stored in the memory 505. The calculated phase difference is supplied to the phase correction information estimator 105a. This phase difference is stored in the multipath-fading phase deviation amount storage unit of the phase correction information estimator 105a. Here, unlike the first embodiment, the phase correction information estimator 105a operates so that the phase difference is stored directly in the multipath-fading phase deviation amount storage unit, not via the transmission path phase error estimating unit. The calculated phase difference indicates the latest estimated multipath-fading deviation value.

As such, in the fifth embodiment, the estimated multipath-fading deviation value is regularly re-calculated so as to be updated, thereby keeping the value always up to date. Therefore, the effect of a phase correcting process can be increased.

Note that the phase to be stored in the memory may be a phase other than that of a pilot signal vector.

Hereinafter, embodiments for achieving the OFDM communications apparatuses according to the first to fifth embodiments as software are described. Hardware for achieving a software-implemented OFDM communications apparatus may be a semiconductor for digital signal processing (Digital Signal Processor: DSP) capable of executing a program described below, or may be a CPU that reads the program from a storage medium and execute the program. Furthermore, the OFDM communications apparatus to achieve its functions as software incorporates a memory for storing various data being processed. Such a hardware structure is well known, and therefore is not described further. Hereinafter, the operation of the OFDM communications apparatus implemented in software as a program is described below by using flowcharts.

(Sixth embodiment)

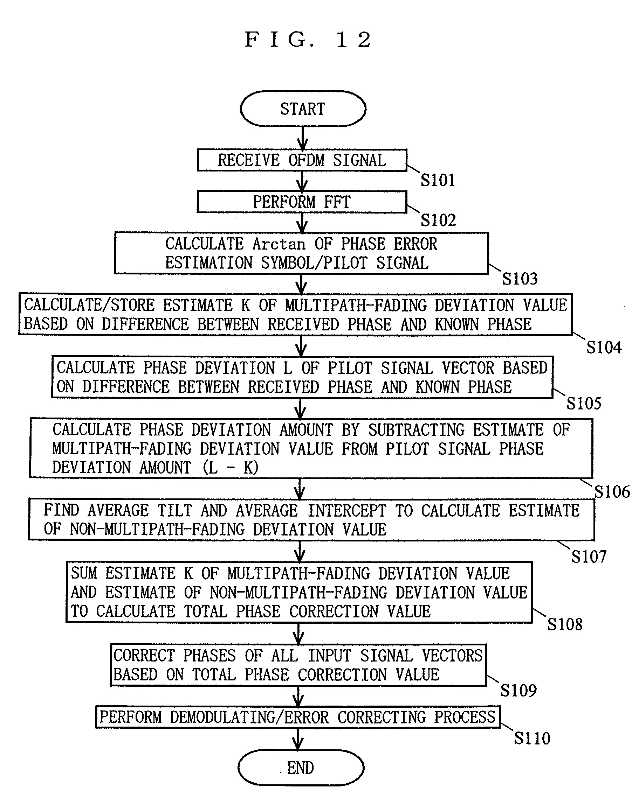

FIG. 12 is a flowchart showing the operation of the OFDM communications apparatus according to a sixth embodiment of the present invention. With reference to FIG. 12, the operation of the OFDM communications apparatus according to the sixth embodiment is described below.

First, the OFDM communications apparatus receives an OFDM signal (step S101). The OFDM communications apparatus then performs as FFT operation onto the received OFDM signal to find a sub-carrier signal vector assigned to each sub-carrier (step S102).

The OFDM communications apparatus then calculates Arctan of the known signal vector and Arctan of the pilot signal vector to find their phases (step S103). The OFDM communications apparatus then subtracts the known phase of the known signal vector previously stored in the memory from the phase of the received known signal vector to calculate an estimated multipath-fading deviation value $K$, and then stores the value $K$ in the memory (step S104).

The OFDM communications apparatus then subtracts the known phase of the pilot signal vector previously stored in the memory from the phase of the received pilot signal vector to calculate a phase deviation amount $L$ of the pilot signal vector (step S105). The OFDM communications apparatus then subtracts the estimated multipath-fading deviation value $K$ calculated in step S104 from the phase deviation amount $L$ of the pilot signal vector calculated in step S105 to obtain a value $L-K$ (step S106). With this, a phase deviation amount is calculated by subtracting the estimated multipath-fading deviation value from the pilot signal phase deviation amount.

Based on the phase deviation amount calculated in step S106, the OFDM communications apparatus finds an average tilt value and an average intercept value of the phase deviation estimation line, thereby finding an estimated non-multipath-fading deviation value with the use of each OFDM symbol number (step S107). The manners in which the average tilt value and intercept value are calculated has been described in detail for the phase deviation amount calculating circuit 703 according to the first embodiment, and therefore is not described herein.

The OFDM communications apparatus then sums the estimated multipath-fading deviation value K stored in the memory and the estimated non-multipath-fading deviation value to calculate a total phase correction value (step S108).

Based on the total phase correction value calculated in step S108, the OFDM communications apparatus corrects phases of all input signal vectors (step S109). Based on all input signal vectors with their phases corrected, the OFDM communications apparatus performs a demodulating process with error correction (step S110), and then ends the operation.

By executing a program for causing the OFDM communications apparatus to perform the above operation, it is possible to provide an OFDM communications apparatus having effects similar to those of the OFDM communications apparatus according to the first embodiment.

(Seventh embodiment)

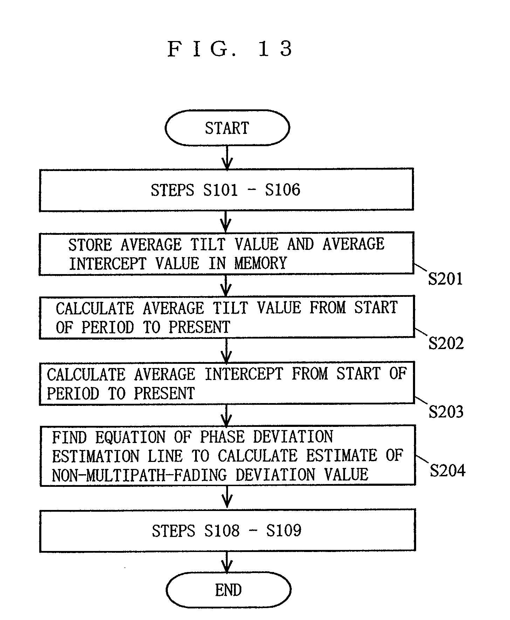

FIG. 13 is a flowchart showing the operation of an OFDM communications apparatus according to a seventh embodiment of the present invention. In FIG. 13, operations similar to those in the OFDM communications apparatus according to the sixth embodiment are provided with the same step numbers, and are not described herein. With reference to FIG. 13, the operation of the OFDM communications apparatus according to the seventh embodiment is described below.

After steps S101-S106, the OFDM communications apparatus finds an average tilt value and an average intercept value of the phase deviation amount estimation line, and stores these values for a predetermined period in the memory (step S201). The OFDM communications apparatus then uses the average tilt values for the predetermined period stored in the memory to calculate an average tilt value of values from the start of that period to the present (step S202). The OFDM communications apparatus then uses the average intercept values for the predetermined period stored in the memory to calculate an average intercept value of those from the start of that period to the present (step S203). The OFDM communications apparatus then uses the calculated average tilt and intercept values from the start of that period to the present to find an equation of the phase deviation amount estimation line, thereby calculating an estimated non-multipath-fading deviation value (step S204).

Thereafter, the OFDM communications apparatus sums the estimated multipath-fading deviation value stored in the memory and the estimated non-multipath-fading deviation value to calculate a total phase correction value, performs a demodulating process with error correction (steps S108 through S110), and then ends the operation.

By executing a program for causing the OFDM communications apparatus to perform the above operation, it is possible to provide an OFDM communications apparatus having effects similar to those of the OFDM communications apparatus according to the second embodiment.

(Eighth embodiment)

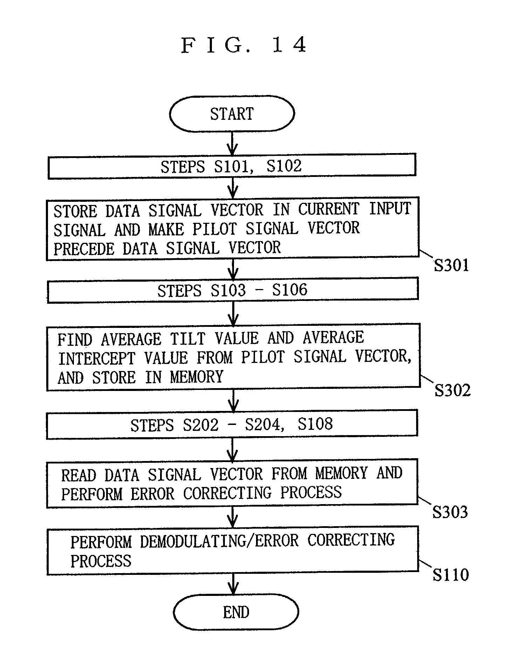

FIG. 14 is a flowchart showing the operation of an OFDM communications apparatus according to an eighth embodiment of the present invention. In FIG. 14, operations similar to those in the OFDM communications apparatus according to the sixth embodiment are provided with the same step numbers, and are not described herein. With reference to FIG. 14, the operation of the OFDM communications apparatus according to the eighth embodiment is described below.

Upon receipt of the input signal and FFT operation, (steps S101 and S102), the OFDM communications apparatus stores only the data vector included in the current input signal, and makes the pilot signal vector precede the data signal vector (step S301).

The OFDM communications apparatus then calculates an estimated multipath-fading phase deviation value, and calculates a phase deviation amount by subtracting the estimated multipath-fading phase deviation value from the phase deviation amount of the preceding pilot signal (steps S103 through S106).

Next, an average tilt value and an average intercept value are found from the preceding pilot signal vector, and are then stored in the memory (step S302).

The OFDM communications apparatus then finds a total phase correction amount (steps S202 through S204, S108). The OFDM communications apparatus then reads the data vector from the memory and, based on the total phase correction amount, rotates the vector for phase correction (step S303). The OFDM communications apparatus then performs a demodulating/error correcting process (step S110), and ends the operation.

By executing a program for causing the OFDM communications apparatus to perform the above operation, it is possible to provide an OFDM communications apparatus having effects similar to those of the OFDM communications apparatus according to the third embodiment.

(Ninth embodiment)

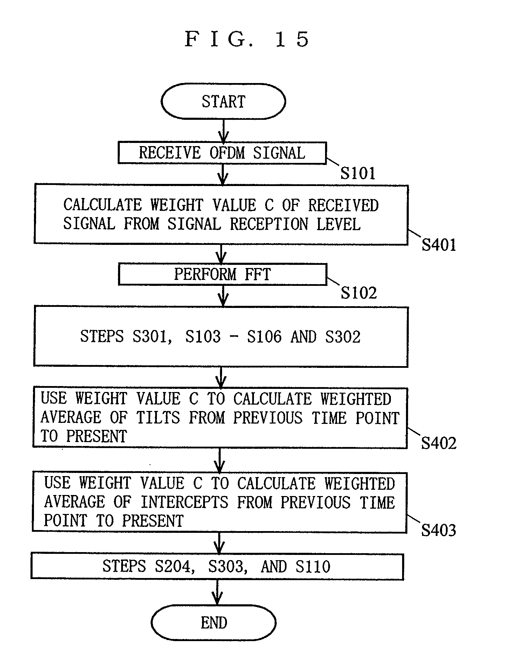

FIG. 15 is a flowchart showing the operation of an OFDM communications apparatus according to a ninth embodiment of the present invention. In FIG. 15, operations similar to those in the OFDM communications apparatus according to the eighth embodiment are provided with the same step numbers, and are not described herein. With reference to FIG. 15, the operation of the OFDM communications apparatus according to the ninth embodiment is described below.

Upon receipt of an OFDM signal (step S101), the OFDM communications apparatus detects the state of reception from a signal's reception level, and then calculates a weight value C in accordance with the state of reception (step S401).

The OFDM communications apparatus then performs an FFT operation (step S102). The OFDM communications apparatus then calculates an estimated multipath-fading deviation value and a phase deviation amount without the estimated multipath-fading deviation value, and then calculates an average tilt value and an average intercept value of the phase deviation estimation line (steps S301, S103 through S106, S302).

The OFDM communications apparatus then uses the weight value C to calculate a weighted average of tilt values from a previous time point to the present (step S402). The OFDM communications apparatus then uses the weight value C to calculate a weighted average of intercept values from the previous time point to the present (step S403).

Thereafter, the OFDM communications apparatus finds an estimated non-multipath-fading deviation value and a total phase correction value, performs a phase correcting process on the data vector for demodulation (steps S204, S303, S110), and then ends the operation.

By executing a program for causing the OFDM communications apparatus to perform the above operation, it is possible to provide an OFDM communications apparatus having effects similar to those of the OFDM communications apparatus according to the fourth embodiment.

(Tenth embodiment)

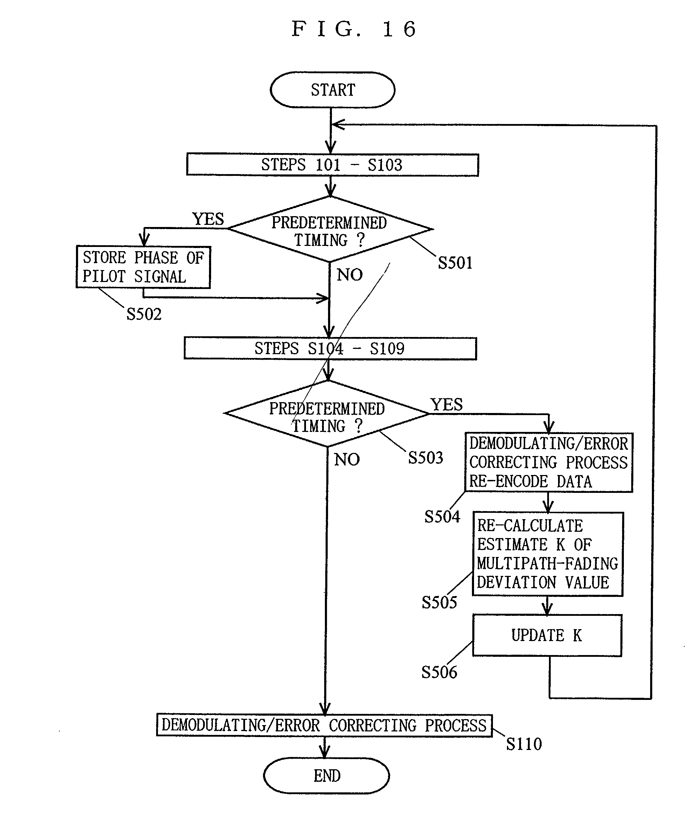

FIG. 16 is a flowchart showing the operation of an OFDM communications apparatus according to a tenth embodiment of the present invention. In FIG. 16, operations similar to those in the OFDM communications apparatus according to the sixth embodiment are provided with the same step numbers, and are not described herein. With reference to FIG. 16, the operation of the OFDM communications apparatus according to the tenth embodiment is described below.

Upon receipt of the input signal, FFT operation, and phase calculation (steps S101 through S103), the OFDM communications apparatus determines whether a time according to a predetermined timing has come (step S501).

If such a time has come, the OFDM communications apparatus stores the phase of a pilot signal vector at that time in the memory (step S502), and then proceeds to steps S104 and thereafter. If such a time has not yet come, the OFDM communications apparatus directly proceeds to step S104 and thereafter.

In steps S104 through S109, the OFDM communications apparatus calculates a total phase correction value. the OFDM communications apparatus then determines whether a time according to another predetermined timing has come (step S503). If such a time has not come yet, the OFDM communications apparatus performs a demodulating/ error correcting process (step S110).

If such a time has come, the OFDM communications apparatus performs a demodulating/error correcting process (step S110: an arrow to this step is not shown in FIG. 16) and also re-encodes the data (step S504). The OFDM communications apparatus then performs Arctan calculation to find the phase of a pilot signal vector in the re-encoded data, and compares the found vector with the phase of the pilot signal vector stored in the memory to re-calculate the estimated multipath-fading deviation amount $K$ (step S505). Thereafter, the OFDM communications apparatus updates the estimated multipath-fading deviation amount K, and then returns to step S101.

By executing a program for causing the OFDM communications apparatus to perform the above operation, it is possible to provide an OFDM communications apparatus having effects similar to those of the OFDM communications apparatus according to the fifth embodiment.

While the invention has been described in detail, the foregoing description is in all aspects illustrative and not restrictive. It is understood that numerous other modifications and variations can be devised without departing from the scope of the invention.

**Claims**

1. An OFDM communications apparatus (1) for correcting a phase of a vector obtained by performing a Fast Fourier Transform (FFT) process on a received OFDM signal, comprising:

   a phase calculating unit (104) for calculating the phase of the vector;
   a phase correction information estimating unit (105) for calculating an estimated phase deviation value for each of a plurality of factors causing phase deviation by comparing, with a known phase, the phase of the vector calculated by the phase calculating unit for each of a plurality of known signals included in the OFDM signal;
   an adding unit (106) for adding together a plurality of said estimated phase deviation values calculated by the phase correction information estimating unit, and outputting the addition result as a total phase correction value; and
   a vector phase rotator (104) for rotating the phase of the vector by the total phase correction value outputted from the adding unit, and outputting the vector with the corrected phase.

2. The OFDM communications apparatus according to claim 1, wherein
   the phase correction information estimating unit calculates the estimated phase deviation value by calculating a weighted average of an estimated phase deviation value obtained from a known signal (207, 209) included in an OFDM symbol to be demodulated and an estimated phase deviation value obtained from a known signal included in an OFDM symbol other than the OFDM symbol to be demodulated.

3. The OFDM communications apparatus according to claim 2, wherein
   the phase correction information estimating unit calculates a weighted average by increasing a weight value applied to an estimated phase deviation value obtained from an OFDM symbol closer to the OFDM symbol to be demodulated.

4. The OFDM communications apparatus according to claim 3, wherein

the estimated phase deviation value obtained from the known signal included in the OFDM symbol other than the OFDM symbol to be demodulated is an estimated phase deviation value obtained from at least one OFDM symbol for a predetermined section previous to the OFDM symbol to be demodulated.

**5.** The OFDM communications apparatus according to claim 3, wherein
the estimated phase deviation value obtained from the known signal included in the OFDM symbol other than the OFDM symbol to be demodulated is an estimated phase deviation value obtained from all OFDM symbols previous to the OFDM symbol to be demodulated.

**6.** The OFDM communications apparatus according to claim 3, wherein
the estimated phase deviation value obtained from the known signal included in the OFDM symbol other than the OFDM symbol to be demodulated is an estimated phase deviation value obtained from at least one OFDM symbol subsequent to the OFDM symbol to be demodulated.

**7.** The OFDM communications apparatus according to claim 3, wherein
the estimated phase deviation value obtained from the known signal included in the OFDM symbol other than the OFDM symbol to be demodulated is an estimated phase deviation value obtained from at least one OFDM symbol previous to the OFDM symbol to be demodulated and at least one OFDM symbol subsequent to the OFDM symbol to be demodulated.

**8.** The OFDM communications apparatus according to claim 2, further comprising
a reception state discriminating unit (1201) for discriminating a state of reception of the received OFDM signal, wherein
the reception state discriminating unit changes a weight value of the weighted average calculated by the phase correction information estimating unit in accordance with the state of reception of an OFDM symbol included in the received OFDM signal.

**9.** The OFDM communications apparatus according to claim 1, further comprising
a re-encoding unit (501) for regularly re-encoding an OFDM symbol after demodulation, wherein
the phase calculating unit calculates a phase of a vector for the OFDM symbol re-encoded by the re-encoding unit, and
the phase correction information estimating unit corrects the calculated, estimated phase deviation value, based on the phase of the vector calculated by the phase calculating unit for each of a plurality of known signals included in the re-encoded OFDM symbol.

**10.** The OFDM communications apparatus according to claim 1, wherein
the phase calculating unit calculates the phase of the vector only for the known signals.

**11.** The OFDM communications apparatus according to claim 1, wherein
the phase correction information estimating unit uses a polarity reverser for performing comparison with the known phase.

**12.** The OFDM communications apparatus according to claim 1, wherein
the plurality of factors causing phase deviation are classified into multipath-fading and non-multipath-fading,
the OFDM signal includes a known symbol (207) for estimating phase errors occurring due to the multipath fading and a plurality of known pilot signals (209) included in each data symbol,
the phase correction information estimating unit includes:

a first estimated phase deviation value calculating unit (707) for calculating an estimated multipath-fading deviation value by subtracting the known phase from a phase of a vector for the known symbol for estimating the phase errors;
a pilot signal phase deviation amount calculating unit (708, 702) for calculating an amount of phase deviation occurring in the pilot signals due to non-multipath-fading by subtracting the known phase and the estimated multipath-fading deviation value from a phase of a vector for each of the known pilot signals; and
a second estimated phase deviation value calculating unit (703) for calculating an estimated non-multipath-fading deviation value of each OFDM symbol by finding a line for estimating phase deviation occurring due to the non-multipath fading based on the amount of phase deviation calculated by the pilot signal phase deviation amount calculating unit, and

the adding unit adds the estimated multipath-fading deviation value and the estimated non-multipath-fading deviation value together for calculating the total phase correction value.

13. The OFDM communications apparatus according to claim 12, wherein
the second estimated phase deviation value calculating unit calculates the estimated non-multipath-fading deviation value by calculating a weighted average of at least one parameter of a line obtained from pilot signals included in the OFDM symbol to be demodulated and at least one parameter of a line obtained from pilot signals included in an OFDM symbol other than the OFDM symbol to be demodulated.

14. The OFDM communications apparatus according to claim 13, wherein
the second estimated phase deviation value calculating unit calculates the weighted average by increasing a weight value to at least one parameter obtained from a pilot signal closer to a pilot signal included in the OFDM symbol to be demodulated.

15. The OFDM communications apparatus according to claim 14, wherein
the second estimated phase deviation value calculating unit calculates the weighted average by storing at least one parameter obtained from pilot signals included in an OFDM symbol previous to the OFDM symbol to be demodulated as a parameter of the line obtained from the pilot signals included in the OFDM symbol other than the OFDM symbol to be demodulated.

16. The OFDM communications apparatus according to claim 15, further comprising:

a vector storing unit (1001) for temporarily storing vectors of the OFDM symbol to be demodulated; and
a control unit (1006) for first giving vectors of the pilot signals from among the vectors of the OFDM symbol to be stored in the vector storage unit to the pilot signal phase deviation amount calculating unit, wherein
the pilot signal phase deviation amount calculating unit supplies, to the second phase deviation estimation value calculating unit, a phase deviation amount of the vectors of the pilot signals first given, and
based on the phase deviation amount of the pilot signals supplied by the pilot signal phase deviation amount calculating unit, the second estimated phase deviation value calculating unit stores a parameter obtained from an OFDM symbol subsequent to the OFDM symbol to be demodulated as the parameter of the line obtained from the pilot signals included in the OFDM symbol other than the OFDM symbol to be demodulated, and calculates the weighted average by using the parameter stored in the estimated second phase deviation value calculating unit and at least one parameter obtained from pilot signals included in an OFDM symbol previous to the OFDM symbol to be demodulated.

17. The OFDM communications apparatus according to claim 14, further comprising:

a vector storing unit (1001) for temporarily storing vectors of the OFDM symbol to be demodulated; and
a control unit (1006) for first giving, from among the vectors of the OFDM symbol to be stored in the vector storage unit, vectors of the pilot signals to the pilot signal phase deviation amount calculating unit, wherein
the pilot signal phase deviation amount calculating unit calculates a phase deviation amount of the vectors for the pilot signals first given, and supplies the calculated phase deviation amount to the second estimated phase deviation value, and
based on the phase deviation amount of the pilot signals supplied by the pilot signal phase deviation amount calculating unit, the second estimated phase deviation value calculating unit calculates the weighted average by storing a parameter obtained from an OFDM symbol subsequent to the OFDM symbol to be demodulated as the parameter of the line obtained from the pilot signals included in the OFDM symbol other than the OFDM symbol to be demodulated.

18. The OFDM communications apparatus according to claim 13, further comprising
a reception state discriminating unit (1201) for discriminating a state of reception of the received OFDM signal, wherein
the reception state discriminating unit changes a weight value of the weighted average calculated by the second estimated phase deviation value calculating unit in accordance with the state of reception of an OFDM symbol included in the received OFDM signal.

19. The OFDM communications apparatus according to claim 12, further comprising
a re-encoding unit (501) for regularly re-encoding an OFDM symbol after demodulation, wherein

the phase calculating unit calculates a phase of a vector for the OFDM symbol re-encoded by the re-encoding unit, and

the pilot signal phase deviation calculating unit subtracts, from a phase of a vector included in the re-encoded OFDM symbol calculated by the phase calculating unit, a phase of a vector for pilot signals corresponding to the OFDM symbol and, based on the subtraction result, corrects the estimated multipath-fading deviation value.

20. An OFDM communications apparatus (3) for correcting a phase of a vector obtained by performing a Fast Fourier Transform (FFT) process on a received OFDM signal, comprising:

a phase calculating unit (104) for calculating the phase of the vector;
an estimated phase deviation value calculating unit (1202) for calculating a line of an estimated non-multipath-fading deviation value based on the phase of the vector for pilot signals calculated by the phase calculating unit, and then calculating an estimated phase deviation value for each OFDM symbol; and
a vector phase rotator (104) for rotating the phase of the vector by the estimated non-multipath-fading deviation value calculated by the estimate phase deviation value calculating unit, and outputting the vector with the corrected phase, wherein
the estimated phase deviation value calculating unit calculates the estimated phase deviation value by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

21. The OFDM communications apparatus according to claim 20, wherein
the estimated phase deviation value calculating unit calculates the weighted average of the parameters by storing a parameter of an estimation line obtained from pilot signals included in an OFDM symbol previous to the OFDM symbol to be demodulated as the parameter of the phase deviation estimation line obtained from the pilot signals included in the OFDM symbol other than the OFDM symbol to be demodulated.

22. The OFDM communications apparatus according to claim 20, further comprising:

a vector storage unit (1001) for temporarily storing vectors for the OFDM symbol to be demodulated; and
a control unit (1006) for first giving, from among the vectors of the OFDM symbol to be stored in the vector storage unit, vectors of the pilot signals to the estimated phase deviation value calculating unit, wherein
the estimated phase deviation value calculating unit calculates a weighted average of a parameter of a phase deviation estimation line obtained from pilot signals included in an OFDM symbol subsequent to the OFDM symbol to be demodulated by storing the parameter of the phase deviation estimation line based on the pilot signals given first.

23. An OFDM communications apparatus (5) for correcting a phase of a vector obtained by performing a Fast Fourier Transform (FFT) process on a received OFDM signal, comprising:

a phase calculating unit (104) for calculating the phase of the vector;
an estimated phase deviation value calculating unit (1202) for calculating a line of an estimated multipath-fading deviation value based on the phase of the vector for a known symbol for estimating phase errors occurring due to multipath fading;
a vector phase rotator (104) for rotating the phase of the vector by the estimated multipath-fading deviation value calculated by the estimate phase deviation value calculating unit, and outputting the vector with the corrected phase; and
a re-encoder (501) for regularly re-encoding an OFDM symbol after demodulation, wherein
the phase calculating unit calculates a phase of a vector for the OFDM symbol re-encoded by the re-encoding unit, and
the estimated phase deviation value calculating unit subtracts, from the phase of the vector for pilot signals included in the OFDM symbol re-encoded by the phase calculating unit, the phase of the vector for pilot signals corresponding to the re-encoded OFDM symbol and, based on the subtraction result, corrects the estimated multipath-fading deviation value.

24. A method for correcting a phase of a vector obtained by performing a Fast Fourier Transform (FFT) process on a received OFDM signal, the method comprising:

a step (S103) of calculating the phase of the vector;

a step (S104 to S107) of calculating an estimated phase deviation value for each of a plurality of factors causing phase deviation by comparing, with a known phase, the calculated phase of the vector for each of a plurality of known signals included in the OFDM signal;

a step (S108) of adding together a plurality of said calculated, estimated phase deviation values, and outputting the addition result as a total phase correction value; and

a step (S109) of rotating the phase of the vector by the total phase correction value, and outputting the vector with the corrected phase.

25. A method for correcting a phase of a vector obtained by performing a Fast Fourier Transform (FFT) process on a received OFDM signal, the method comprising:

a step (S103) of calculating the phase of the vector;

a step (S201 to S204) of calculating a line of an estimated non-multipath-fading deviation value based on the phase of the vector for pilot signals, and then calculating an estimated phase deviation value for each OFDM symbol; and

a step (S109) of rotating the phase of the vector by the calculated, estimated non-multipath-fading deviation value, and outputting the vector with the corrected phase, wherein

in the estimated phase deviation value calculating step, the estimated phase deviation value is calculated by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

26. A method for correcting a phase of a vector obtained by performing a Fast Fourier Transform (FFT) process on a received OFDM signal, the method comprising:

a step (S103) of calculating the phase of the vector;

a step (S104) of calculating a line of an estimated multipath-fading deviation value based on the phase of the vector for a known symbol for estimating phase errors occurring due to multipath fading;

a step (S109) of rotating the phase of the vector by the calculated, estimated multipath-fading deviation value, and outputting the vector with the corrected phase;

a step (S504) of regularly re-encoding an OFDM symbol after demodulation,

a step (S505) of calculating a phase of a vector of the re-encoded OFDM symbol; and

a step (S506) of subtracting, from the phase of the vector for pilot signals included in the re-encoded OFDM symbol, the phase of the vector for pilot signals corresponding to the re-encoded OFDM symbol and, based on the subtraction result, correcting the estimated multipath-fading deviation value.

27. A program to be executed on an OFDM communications apparatus for correcting a phase of a vector obtained by performing a Fast Fourier Transform (FFT) process on a received OFDM signal, the program comprising:

a step (S103) of calculating the phase of the vector;

a step (S104 to S107) of calculating an estimated phase deviation value for each of a plurality of factors causing phase deviation by comparing, with a known phase, the calculated phase of the vector for each of a plurality of known signals included in the OFDM signal;

a step (S108) of adding together a plurality of said calculated, estimated phase deviation values, and outputting the addition result as a total phase correction value; and

a step (S109) of rotating the phase of the vector by the total phase correction value, and outputting the vector with the corrected phase.

28. A program to be executed on an OFDM communications apparatus for correcting a phase of a vector obtained by performing a Fast Fourier Transform (FFT) process on a received OFDM signal, the program comprising:

a step (S103) of calculating the phase of the vector;

a step (S201 to S204) of calculating a line of an estimated non-multipath-fading deviation value based on the phase of the vector for pilot signals, and then calculating an estimated phase deviation value for each OFDM symbol; and

a step (S109) of rotating the phase of the vector by the calculated, estimated non-multipath-fading deviation value, and outputting the vector with the corrected phase, wherein

in the estimated phase deviation value calculating step, the estimated phase deviation value is calculated by calculating a weighted average of a parameter of a phase deviation estimation line obtained from pilot signals included in an OFDM symbol to be demodulated and a parameter of a phase deviation estimation line obtained from pilot signals included in an OFDM symbol other than the OFDM symbol to be demodulated.

29. A program to be executed on an OFDM communications apparatus for correcting a phase of a vector obtained by performing a Fast Fourier Transform (FFT) process on a received OFDM signal, the program comprising:

a step (S103) of calculating the phase of the vector;
a step (S104) of calculating a line of an estimated multipath-fading deviation value based on the phase of the vector for a known symbol for estimating phase errors occurring due to multipath fading;
a step (S109) of rotating the phase of the vector by the calculated, estimated multipath-fading deviation value, and outputting the vector with the corrected phase;
a step (S504) of regularly re-encoding an OFDM symbol after demodulation,
a step (S505) of calculating a phase of a vector of the re-encoded OFDM symbol; and
a step (S506) of subtracting, from the phase of the vector for pilot signals included in the re-encoded OFDM symbol, a phase of a vector for pilot signals corresponding to the re-encoded OFDM symbol and, based on the subtraction result, correcting the estimated multipath-fading deviation value.

FIG. 1

EP 1 328 100 A1

# F I G. 2

X(n),
Y(n)    ADDER 106

PHASE
CORRECTION
AMOUNT

FFT CIRCUIT
103

FFT CIRCUIT
103

Z(n)

X(n)

Y(n)

SIGN
SELECTING
UNIT

604

ANGULAR
CHANGE
CONSTANT
TABLE UNIT

605

BIT SHIFT
UNIT

606

BIT SHIFT
UNIT

607

SIGN ADDING
UNIT

608

SIGN ADDING
UNIT

609

SIGN ADDING
UNIT

610

ADDER/
SUBTRACTOR

611

ADDER/
SUBTRACTOR

612

ADDER/
SUBTRACTOR

613

Z(n+1)

X(n+1)

Y(n+1)

PHASE
CORRECTION
INFORMATION
ESTIMATOR 105

DEMODULATOR
/ERROR
CORRECTOR
107

DEMODULATOR
/ERROR
CORRECTOR
107

104

27

# F I G. 3

Arctan VECTOR PHASE ROTATOR 104

PHASE CORRECTION INFORMATION ESTIMATOR

| PILOT SIGNAL PHASE DEVIATION AMOUNT CALCULATING UNIT |
708

705

| CONTROL CIRCUIT |
706

704

| TRANSMISSION PATH PHASE ERROR ESTIMATING UNIT |
707

| MULTIPATH-FADING PHASE DEVIATION AMOUNT STORAGE UNIT |
701

+

−

702

| PHASE DEVIATION AMOUNT CALCULATING CIRCUIT |
703

105

ADDER 106

ADDER 106

# F I G. 4

| SUBTRACTOR |
801

| FIRST AVERAGING CIRCUIT |
802

| DELAY UNIT |
803

| CARRIER NUMBER GENERATOR |
804

| MULTIPLIER |
805

SUBTRACTOR 702

| ACCUMULATOR |
806

| SECOND AVERAGING CIRCUIT |
807

| ADDER |
808

ADDER 106

PHASE DEVIATION AMOUNT CALCULATING CIRCUIT

703

# FIG. 5

PHASE DEVIATION AMOUNT CALCULATING CIRCUIT

SUBTRACTOR 702 →

- SUBTRACTOR 801
- DELAY UNIT 803
- ACCUMULATOR 806
- FIRST AVERAGING CIRCUIT 802
- CARRIER NUMBER GENERATOR 804
- SECOND AVERAGING CIRCUIT 807
- THIRD AVERAGING CIRCUIT 901
- FIRST MULTISTAGE DELAY UNIT 902
- FOURTH AVERAGING CIRCUIT 903
- SECOND MULTISTAGE DELAY UNIT 904
- MULTIPLIER 805
- ADDER 808

→ ADDER 106

703

EP 1 328 100 A1

EP 1 328 100 A1

F I G. 6

EP 1 328 100 A1

F I G. 7

# F I G.  8

Arctan VECTOR PHASE ROTATOR 104

PHASE CORRECTION INFORMATION ESTIMATOR

705

CONTROL
CIRCUIT

706

PILOT SIGNAL
PHASE DEVIATION
AMOUNT
CALCULATING UNIT

708

704

TRANSMISSION
PATH PHASE
ERROR
ESTIMATING
UNIT

707

MULTIPATH-FADING
PHASE DEVIATION
AMOUNT STORAGE UNIT

701

+

−

702

PHASE DEVIATION
AMOUNT
CALCULATING
CIRCUIT

1301

1202

ADDER 106

ADDER 106

EP 1 328 100 A1

# F I G. 1 0

WEIGHT VALUE
GENERATOR 1302

RECEIVING
CIRCUIT
102

SQUARE
CIRCUIT

1501

SQUARE
CIRCUIT

1502

1503

THRESHOLD
GENERATING
CIRCUIT

1504

COMPARATOR

1505

RECEPTION SIGNAL STATE DISCRIMINATOR

1201

F I G.   1 1

# F I G. 1 2

```
                    ┌──────────┐
                    │  START   │
                    └────┬─────┘
                         ▼
            ┌─────────────────────────┐
            │   RECEIVE OFDM SIGNAL    │
            └────────────┬────────────┘ S101
                         ▼
            ┌─────────────────────────┐
            │      PERFORM FFT         │
            └────────────┬────────────┘ S102
                         ▼
       ┌────────────────────────────────────┐
       │ CALCULATE Arctan OF PHASE ERROR     │
       │ ESTIMATION SYMBOL/PILOT SIGNAL      │
       └─────────────────┬──────────────────┘ S103
                         ▼
 ┌─────────────────────────────────────────────────────────┐
 │ CALCULATE/STORE ESTIMATE K OF MULTIPATH-FADING DEVIATION │
 │ VALUE BASED ON DIFFERENCE BETWEEN RECEIVED PHASE AND     │
 │ KNOWN PHASE                                              │
 └───────────────────────────┬─────────────────────────────┘ S104
                             ▼
   ┌───────────────────────────────────────────────────────┐
   │ CALCULATE PHASE DEVIATION L OF PILOT SIGNAL VECTOR     │
   │ BASED ON DIFFERENCE BETWEEN RECEIVED PHASE AND KNOWN   │
   │ PHASE                                                 │
   └─────────────────────────┬─────────────────────────────┘ S105
                             ▼
   ┌───────────────────────────────────────────────────────┐
   │ CALCULATE PHASE DEVIATION AMOUNT BY SUBTRACTING       │
   │ ESTIMATE OF MULTIPATH-FADING DEVIATION VALUE FROM     │
   │ PILOT SIGNAL PHASE DEVIATION AMOUNT (L − K)           │
   └─────────────────────────┬─────────────────────────────┘ S106
                             ▼
   ┌───────────────────────────────────────────────────────┐
   │ FIND AVERAGE TILT AND AVERAGE INTERCEPT TO CALCULATE  │
   │ ESTIMATE OF NON-MULTIPATH-FADING DEVIATION VALUE     │
   └─────────────────────────┬─────────────────────────────┘ S107
                             ▼
   ┌───────────────────────────────────────────────────────┐
   │ SUM ESTIMATE K OF MULTIPATH-FADING DEVIATION VALUE   │
   │ AND ESTIMATE OF NON-MULTIPATH-FADING DEVIATION VALUE │
   │ TO CALCULATE TOTAL PHASE CORRECTION VALUE            │
   └─────────────────────────┬─────────────────────────────┘ S108
                             ▼
       ┌───────────────────────────────────────────┐
       │ CORRECT PHASES OF ALL INPUT SIGNAL VECTORS │
       │ BASED ON TOTAL PHASE CORRECTION VALUE      │
       └──────────────────────┬────────────────────┘ S109
                             ▼
       ┌───────────────────────────────────────────┐
       │ PERFORM DEMODULATING/ERROR CORRECTING      │
       │ PROCESS                                    │
       └──────────────────────┬────────────────────┘ S110
                             ▼
                    ┌──────────┐
                    │   END    │
                    └──────────┘
```

FIG. 13

```
        ┌──────────┐
        │  START   │
        └────┬─────┘
             ▼
┌─────────────────────────────────┐
│       STEPS S101 - S106         │
└────────────────┬────────────────┘
                 ▼
┌─────────────────────────────────┐
│ STORE AVERAGE TILT VALUE AND    │
│ AVERAGE INTERCEPT VALUE IN      │   S201
│ MEMORY                          │
└────────────────┬────────────────┘
                 ▼
┌─────────────────────────────────┐
│ CALCULATE AVERAGE TILT VALUE    │
│ FROM START OF PERIOD TO PRESENT │   S202
└────────────────┬────────────────┘
                 ▼
┌─────────────────────────────────┐
│ CALCULATE AVERAGE INTERCEPT     │
│ FROM START OF PERIOD TO PRESENT │   S203
└────────────────┬────────────────┘
                 ▼
┌─────────────────────────────────┐
│ FIND EQUATION OF PHASE          │
│ DEVIATION ESTIMATION LINE TO    │
│ CALCULATE ESTIMATE OF           │   S204
│ NON-MULTIPATH-FADING DEVIATION  │
│ VALUE                           │
└────────────────┬────────────────┘
                 ▼
┌─────────────────────────────────┐
│       STEPS S108 - S109         │
└────────────────┬────────────────┘
                 ▼
        ┌──────────┐
        │   END    │
        └──────────┘
```

# F I G. 1 4

```
                    ┌──────────┐
                    │  START   │
                    └────┬─────┘
                         ↓
      ┌──────────────────────────────────────┐
      │         STEPS S101, S102             │
      └──────────────────┬───────────────────┘
                         ↓
      ┌──────────────────────────────────────┐
      │ STORE DATA SIGNAL VECTOR IN CURRENT INPUT │
      │ SIGNAL AND MAKE PILOT SIGNAL VECTOR  │
      │ PRECEDE DATA SIGNAL VECTOR           │── S301
      └──────────────────┬───────────────────┘
                         ↓
      ┌──────────────────────────────────────┐
      │         STEPS S103 - S106            │
      └──────────────────┬───────────────────┘
                         ↓
      ┌──────────────────────────────────────┐
      │ FIND AVERAGE TILT VALUE AND AVERAGE  │
      │ INTERCEPT VALUE FROM PILOT SIGNAL VECTOR, │
      │ AND STORE IN MEMORY                  │── S302
      └──────────────────┬───────────────────┘
                         ↓
      ┌──────────────────────────────────────┐
      │      STEPS S202 - S204, S108         │
      └──────────────────┬───────────────────┘
                         ↓
      ┌──────────────────────────────────────┐
      │ READ DATA SIGNAL VECTOR FROM MEMORY AND │
      │ PERFORM ERROR CORRECTING PROCESS     │── S303
      └──────────────────┬───────────────────┘
                         ↓
      ┌──────────────────────────────────────┐
      │ PERFORM DEMODULATING/ERROR CORRECTING │
      │ PROCESS                              │── S110
      └──────────────────┬───────────────────┘
                         ↓
                    ┌──────────┐
                    │   END    │
                    └──────────┘
```

F I G. 1 5

```
                    ┌──────────────┐
                    │    START     │
                    └──────┬───────┘
                           ↓
              ┌────────────────────────┐
              │  RECEIVE OFDM SIGNAL   │
              └────────────┬───────────┘ ⟍S101
                           ↓
        ┌──────────────────────────────────────┐
        │ CALCULATE WEIGHT VALUE C OF RECEIVED  │
        │ SIGNAL FROM SIGNAL RECEPTION LEVEL    │
        └──────────────────┬───────────────────┘ ⟍S401
                           ↓
              ┌────────────────────────┐
              │      PERFORM FFT       │
              └────────────┬───────────┘ ⟍S102
                           ↓
        ┌──────────────────────────────────────┐
        │   STEPS S301, S103 - S106 AND S302    │
        └──────────────────┬───────────────────┘
                           ↓
        ┌──────────────────────────────────────┐
        │ USE WEIGHT VALUE C TO CALCULATE WEIGHTED│
        │ AVERAGE OF TILTS FROM PREVIOUS TIME POINT│
        │ TO PRESENT                            │
        └──────────────────┬───────────────────┘ ⟍S402
                           ↓
        ┌──────────────────────────────────────┐
        │ USE WEIGHT VALUE C TO CALCULATE WEIGHTED│
        │ AVERAGE OF INTERCEPTS FROM PREVIOUS TIME│
        │ POINT TO PRESENT                      │
        └──────────────────┬───────────────────┘ ⟍S403
                           ↓
        ┌──────────────────────────────────────┐
        │      STEPS S204, S303, AND S110       │
        └──────────────────┬───────────────────┘
                           ↓
                    ┌──────────────┐
                    │     END      │
                    └──────────────┘
```

F I G . 1 6

```
                    ┌─────────┐
                    │  START  │
                    └─────────┘
                         │
                         ▼
              ┌─────────────────────┐
              │   STEPS 101 - S103  │
              └─────────────────────┘
                         │
                         ▼
    YES        ╱────────────────╲
  ◄────────── ◀  PREDETERMINED   ▶
  │            ╲    TIMING ?     ╱   S501
  │             ╲──────────────╱
  ▼                    │ NO
┌──────────────┐       │
│ STORE PHASE OF│      │
│ PILOT SIGNAL  │      │
└──────────────┘       │
  │                    │
  S502 ────────────────►│
                        ▼
              ┌─────────────────────┐
              │  STEPS S104 - S109  │
              └─────────────────────┘
                         │
                         ▼
               ╱────────────────╲     YES
              ◀  PREDETERMINED   ▶ ──────────►
               ╲    TIMING ?     ╱
                ╲──────────────╱   S503
                       │ NO              │
                       │                 ▼
                       │      ┌─────────────────────┐
                       │      │ DEMODULATING/ERROR  │
                       │      │ CORRECTING PROCESS  │
                       │      │ RE-ENCODE DATA      │
                       │      └─────────────────────┘
                       │        S504    │
                       │                ▼
                       │      ┌─────────────────────┐
                       │      │ RE-CALCULATE        │
                       │      │ ESTIMATE K OF       │
                       │      │ MULTIPATH-FADING    │
                       │      │ DEVIATION VALUE     │
                       │      └─────────────────────┘
                       │        S505    │
                       │                ▼
                       │      ┌─────────────────────┐
                       │      │     UPDATE K        │
                       │      └─────────────────────┘
                       │        S506
                       ▼
      ┌──────────────────────────────────────────┐
      │ DEMODULATING/ERROR  CORRECTING  PROCESS   │  S110
      └──────────────────────────────────────────┘
                       │
                       ▼
                 ┌─────────┐
                 │   END   │
                 └─────────┘
```

FIG. 17A

I

A/D

DIGITAL
PROCESSING
SECTION

f

Q

A/D

999

(FACTOR 2: θ1)

f1

f2

(FACTOR 3: θ, FACTOR 4: φ)

FIG. 17B

φ

θ

FIG. 18

| RECEIVING CIRCUIT | FFT CIRCUIT | TRANSMISSION PATH ESTIMATING CIRCUIT | PHASE COMPENSATING CIRCUIT | DEMODULATING AND ERROR CORRECTING CIRCUIT |
|---|---|---|---|---|
| 991 | 992 | 993 | 994 | 995 |

F I G. 1 9

ADVANCING DIRECTION →

211

COMMUNICATIONS PACKET

| · · · | TRANSMISSION /RECEPTION DATA SYMBOL | TRANSMISSION /RECEPTION DATA SYMBOL | TRANSMISSION /RECEPTION DATA SYMBOL | SYMBOL FOR PURPOSES OTHER THAN TRANSMISSION PATH ESTIMATION | SYMBOL FOR ESTIMATING PHASE ERROR ON TRANSMISSION PATH |

207  HEADER PORTION    208

206

209      209      210   210   209      209

F I G. 2 0

θ DEVIATION    PHASE DEVIATION AMOUNT ESTIMATION LINE

PILOT SIGNALS
(FOUR SIGNALS PER SYMBOL)

O                f

DATA SIGNAL

## EUROPEAN SEARCH REPORT

**European Patent Office**

**Application Number**

EP 03 00 0198

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 453 203 A (TELEBIT CORP) 23 October 1991 (1991-10-23) <br><br> * page 1, line 1 - line 19 * <br> * page 3, line 11 - line 36 * <br> * page 4, line 20 - page 7, line 5; figures 2,3,5 * | 1,9-11, 19,23, 24,26, 27,29 | H04L27/26 <br> H04L25/02 |
| Y | | 2-8, 13-15,18 | |
| A | | 12,16,17 | |
| | --- | | |
| X | EP 0 859 494 A (MATSUSHITA ELECTRIC IND CO LTD) 19 August 1998 (1998-08-19) <br> * page 5, line 29 - page 7, line 25 * <br> * page 7, line 47 - page 9, line 34; figures 1,3,4 * | 20-22, 25,28 | |
| Y | | 13-15 | |
| | --- | | |
| Y | US 2001/015954 A1 (KUWABARA MASAHIRO ET AL) 23 August 2001 (2001-08-23) <br> * page 1, paragraph 2 - paragraph 4; figures 1,2 * <br> * page 2, paragraph 32 - page 3, paragraph 40 * | 2-7 | **TECHNICAL FIELDS SEARCHED (Int.Cl.7)** <br><br> H04L |
| | --- | | |
| Y | EP 1 133 093 A (MATSUSHITA ELECTRIC IND CO LTD) 12 September 2001 (2001-09-12) <br> * page 4, line 8 - page 8, line 32; figures 2-4,9-12 * | 8,18 | |
| | --- | | |
| A | FR 2 721 778 A (TELEDIFFUSION FSE;FRANCE TELECOM) 29 December 1995 (1995-12-29) <br> * page 8, line 16 - page 13, line 4; figures 1,3,6 * | 1-29 | |
| | --- | | |
| | -/-- | | |

The present search report has been drawn up for all claims

| Place of search | Date of completion of the search | Examiner |
|---|---|---|
| MUNICH | 20 March 2003 | Marzenke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 00 0198

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CZYLWIK A: "Degradation of multicarrier and single carrier transmission with frequency domain equalization due to pilot-aided channel estimation and frequency synchronization" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 November 1997 (1997-11-03), pages 27-31, XP010254576 ISBN: 0-7803-4198-8 * page 28, right-hand column - page 29, left-hand column; figure 1 * ----- | 1-29 | |

TECHNICAL FIELDS SEARCHED (Int.Cl.7)

The present search report has been drawn up for all claims

| Place of search | Date of completion of the search | Examiner |
|---|---|---|
| MUNICH | 20 March 2003 | Marzenke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 00 0198

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2003

| Patent document cited in search report | | Publication date | Patent family member(s) | | Publication date |
|---|---|---|---|---|---|
| EP 0453203 | A | 23-10-1991 | US | 5206886 A | 27-04-1993 |
| | | | AU | 632680 B2 | 07-01-1993 |
| | | | AU | 7439691 A | 17-10-1991 |
| | | | CA | 2040558 A1 | 17-10-1991 |
| | | | DE | 453203 T1 | 30-04-1992 |
| | | | EP | 0453203 A2 | 23-10-1991 |
| | | | JP | 4227348 A | 17-08-1992 |
| | | | US | 5228062 A | 13-07-1993 |
| EP 0859494 | A | 19-08-1998 | EP | 0859494 A2 | 19-08-1998 |
| | | | JP | 10290208 A | 27-10-1998 |
| US 2001015954 | A1 | 23-08-2001 | JP | 2001237798 A | 31-08-2001 |
| EP 1133093 | A | 12-09-2001 | JP | 2001086092 A | 30-03-2001 |
| | | | AU | 7311000 A | 17-04-2001 |
| | | | EP | 1133093 A1 | 12-09-2001 |
| | | | CN | 1321376 T | 07-11-2001 |
| | | | WO | 0120831 A1 | 22-03-2001 |
| FR 2721778 | A | 29-12-1995 | FR | 2721778 A1 | 29-12-1995 |
| | | | EP | 0767996 A1 | 16-04-1997 |
| | | | WO | 9600472 A1 | 04-01-1996 |

EPO FORM P0459

For more details about this annex : see Official Journal of the European Patent Office, No. 12/82